(19) Europäisches Patentamt
European Patent Office
Office européen des brevets

(11) **EP 1 787 795 A1**

(12) **EUROPEAN PATENT APPLICATION**
published in accordance with Art. 158(3) EPC

(43) Date of publication:
**23.05.2007 Bulletin 2007/21**

(51) Int Cl.:
**B32B 7/02** *(2006.01)*          **H01B 5/14** *(2006.01)*

(21) Application number: **04808157.4**

(22) Date of filing: **27.12.2004**

(86) International application number:
**PCT/JP2004/019807**

(87) International publication number:
**WO 2006/027859 (16.03.2006 Gazette 2006/11)**

(84) Designated Contracting States:
**AT BE BG CH CY CZ DE DK EE ES FI FR GB GR HU IE IS IT LI LT LU MC NL PL PT RO SE SI SK TR**

(30) Priority: **07.09.2004 JP 2004259673**
**08.09.2004 JP 2004260750**

(71) Applicant: **TEIJIN LIMITED**
**Osaka-shi**
**Osaka 541-0054 (JP)**

(72) Inventors:
• **ITO, Haruhiko,**
**Teijin Limited**
**Hino-shi, Tokyo 191-0065 (JP)**

• **MIKOSHIBA, Hitoshi,**
**Teijin Limited**
**Hino-shi, Tokyo 191-0065 (JP)**
• **SHIROISHI, Isao,**
**Teijin Limited**
**Hino-shi, Tokyo 191-0065 (JP)**

(74) Representative: **Hallybone, Huw George et al**
**Carpmaels and Ransford**
**43-45 Bloomsbury Square**
**London WC1A 2RA (GB)**

(54) **TRANSPARENT ELECTROCONDUCTIVE LAMINATE AND TRANSPARENT TOUCH PANEL**

(57)     A transparent conductive laminated body having a cured resin layer-1 and cured resin layer-2 laminated in that order on at least one side of a transparent organic polymer base, with a transparent conductive layer laminated on the cured resin layer-2, wherein at least one relationship among the following: (A) the relationship between the Young's moduli of the cured resin layer-1 and the cured resin layer-2, (B) the relationship between the plastic deformation hardnesses of the cured resin layer-1 and the cured resin layer-2 and (C) the relationship between the hardnesses of the cured resin layer-1 and the cured resin layer-2, is in a specified range, as well as a transparent touch panel employing the transparent conductive laminated body.

Fig. 1

**Description**

Technical Field

The present invention relates to a transparent conductive laminated body having a transparent conductive layer on a transparent organic polymer base, and to a transparent touch panel employing the transparent conductive laminated body.

Background Art

In recent years, portable data terminals housing transparent touch panels for displays and data input have begun to become widely used. Resistance film-type transparent touch panels, which are widely employed as transparent touch panels, are composed of two transparent electrode panels having transparent conductive layers formed thereon and situated facing each other at a spacing of 10 $\mu$m-100 $\mu$m, such that the transparent conductive layer surfaces contact each other only at the areas of applied pressure to activate a switch, thereby allowing, for example, menu selection or input of graphics or characters shown on a display. The increasingly narrowing frames of liquid crystal displays has led to increasingly narrowing frames of transparent touch panels as well. Narrowing frames have tended to create a demand for writing durability at the edges of transparent touch panels (edge writing durability), in addition to the writing durability that has conventionally been required for transparent touch panels.

In order to improve the writing durability required for transparent touch panels, there have been proposed in Patent document 1, Patent document 2 and Patent document 3, transparent conductive laminated bodies employing two transparent film bases that are laminated via an pressure-sensitive adhesive or transparent resin layer having a prescribed hardness (or Young's modulus). Although all of these methods are known to improve the writing durability, they involve complex production processes for lamination of the two transparent film bases via the pressure-sensitive adhesive or transparent resin layer and therefore have poor productivity, while manufacture of large transparent touch panels exceeding 10 inches or more has presented the problem of weak rigidity as a result of lamination of the two transparent film bases, and resultant bending of the transparent conductive laminated body.

Also, Patent document 4 proposes forming a cushion layer with a specified hardness (dynamic hardness of 0.005-2) under the transparent conductive layer, but in this range of hardness, the cushion layer cannot support the volume change that occurs with crystallization of the transparent conductive layer during heat treatment to obtain a crystalline transparent conductive layer, and therefore haze of the transparent conductive laminated body is increased and whitening or an interference pattern is observed in the transparent conductive laminated body.

In Patent document 5, where a transparent conductive laminated body having a cured layer composed mainly of a curing resin and a transparent conductive layer laminated in that order on a transparent plastic film base has a transparent conductive layer surface hardness specified to be 0.4-0.8 GPa, the curing resin components are not particularly indicated and only the transparent conductive layer surface hardness is specified, while cracks occur in the cured layer after an edge writing durability test and the electrical characteristics of the transparent touch panel deteriorate. Furthermore, in Patent document 6 there are laminated a polymer film/stress relaxation layer/transparent conductive layer in that order, wherein the film thickness of the stress relaxation layer is 10-50 $\mu$m and the Vickers hardness is 38-240 N/mm$^2$, but depending on the hardness of the stress relaxation layer that alleviates external stress, it is not always possible to support the volume change that occurs with crystallization of the transparent conductive layer, such that fine creases are introduced in the transparent conductive layer surface, an interference pattern is observed, and haze increases in the transparent conductive laminated body. In the case of a plastic laminated body having a cured film layer between a plastic base layer and conductive layer, with a hardness of 1 GPa or greater for the conductive film as described in Patent document 7, cracks occur in the cured film layer during the edge writing durability test, resulting in deterioration in the electrical characteristics (linearity) of the transparent touch panel.

[Patent document 1] Japanese Unexamined Patent Publication HEI No. 2-66809
[Patent document 2] Japanese Unexamined Patent Publication HEI No. 2-129808
[Patent document 3] Japanese Unexamined Patent Publication HEI No. 8-192492
[Patent document 4] Japanese Unexamined Patent Publication HEI No. 11-34206
[Patent document 5] Japanese Unexamined Patent Publication No. 2002-163932
[Patent document 6] Japanese Unexamined Patent Publication No. 2004-158253
[Patent document 7] Japanese Unexamined Patent Publication HEI No. 11-286067

Disclosure of the Invention

It is an object of the invention to provide a transparent conductive laminated body that can yield a transparent touch panel with improvement in the writing durability required for conventional transparent touch panels, and especially writing durability at the edge regions of transparent touch panels (edge writing durability).

Brief Explanation of the Drawings

Fig. 1 is a schematic diagram representing the structure for the transparent touch panels manufactured in Examples 1 and 3 and Comparative Example 5 of the invention.

Fig. 2 is a schematic diagram representing the structure for the transparent touch panel manufactured in Example 2 of the invention.

Fig. 3 is a schematic diagram representing the structure for the transparent touch panels manufactured in Comparative Examples 2 and 3 of the invention.

Fig. 4 is a schematic diagram representing the structure for the transparent touch panel manufactured in Example 4 of the invention.

Best Mode for Carrying Out the Invention

The present invention will now be explained in detail.

<Relationship between laminated structure and film thickness>

The transparent conductive laminated body of the invention has a cured resin layer-1 and cured resin layer-2 laminated in that order on at least one side of a transparent organic polymer base, with a transparent conductive layer laminated on the cured resin layer-2. With this bilayer structure, it is possible to exhibit the properties of each cured resin layer, i.e. the flexibility and low elasticity of the cured resin layer-1 and the toughness and high elasticity of the cured resin layer-2.

According to the invention, the relationship between the film thickness $d_1$ of the cured resin layer-1 and the film thickness $d_2$ of the cured resin layer-2 must be $0.1 \leq d_2/d_1 \leq 3.0$, and is preferably $0.15 \leq d_2/d_1 \leq 2.5$ and more preferably $0.2 \leq d_2/d_1 \leq 2$, while the respective layer thicknesses must be $0.5 \, \mu m \leq d_1 \leq 10 \, \mu m$, $0.5 \, \mu m \leq d_2 \leq 10 \, \mu m$, and preferably $1 \, \mu m \leq d_1 \leq 10 \mu m$, $1 \, \mu m \leq d_2 \leq 10 \, \mu m$.

If $d_2/d_1 < 0.1$, the thickness of the cured resin layer-2 will be excessively thinner than the thickness of the cured resin layer-1 when the cured resin layer-1 and cured resin layer-2 are laminated on the transparent organic polymer base, and therefore the properties of the cured resin layer-2 will not be adequately exhibited, while the laminate of the cured resin layer-1 and cured resin layer-2 will not be able to support the transparent conductive layer during formation of the transparent conductive layer or after crystallization by heat treatment of the transparent conductive layer, thus resulting in a fine creasing pattern in the transparent conductive layer. This will produce haze and render the transparent conductive laminated body unsuitable for use.

On the other hand, if the cured resin layer-1 and cured resin layer-2 are laminated on the transparent organic polymer base in the relationship $d_2/d_1 > 3$, the thickness of the cured resin layer-2 will be excessively thicker than the thickness of the cured resin layer-1, such that the effect of laminating the cured resin layer-1 and cured resin layer-2 will not be achieved and the properties after lamination will be similar to using the cured resin layer-2 alone. As for the edge writing durability of the transparent touch panel employing the transparent conductive laminated body, cracks occur in the cured resin layer-2, making it impossible to guarantee the electrical characteristics (linearity) of the transparent touch panel, similar to a transparent touch panel employing a transparent conductive laminated body fabricated with only a cured resin layer-2 on a transparent organic polymer base.

If $d_1$ and $d_2$ are less than $0.5 \, \mu m$ the curing property of the cured resin layer will be undesirably impaired, while a film thickness exceeding $10 \, \mu m$ renders working difficult.

<Relationship between Young's modulus, plastic deformation hardness and hardness (1)>

The transparent conductive laminated body of the invention must satisfy at least one condition from among the relationships described below for the Young's modulus, plastic deformation hardness and hardness.

This can provide a transparent conductive laminated body that can yield a transparent touch panel with improved writing durability at edge regions of the transparent touch panel (edge writing durability), which is the object of the invention.

Although it is sufficient to satisfy any one of the conditions for the relationship between the Young's modulus, plastic deformation hardness and hardness, the transparent conductive laminated body of the invention may satisfy all of the conditions.

The relationship between the Young's modulus, plastic deformation hardness and hardness will now be explained in detail.

<Condition (A): Young's modulus relationship>

Condition (A) of the invention is that the Young's modulus $W_0$ of the transparent organic polymer base, the Young's modulus $W_1$ of the cured resin layer-1 alone, the Young's modulus $W_2$ of the cured resin layer-2 alone and the Young's modulus $W_3$ when the cured resin layer-1 and cured resin layer-2 are laminated in that order on the transparent organic polymer base, are in the following relationships: $W_2 > W_0 > W_1$, $W_2 > W_3 > W_1$.

Here, the Young's modulus of the transparent organic polymer base is represented as $W_0$, the Young's modulus measured upon forming the cured resin layer-1 on the transparent organic polymer base is represented as $W_1$, the Young's modulus upon forming the cured resin layer-2 on the transparent organic polymer base is represented as $W_2$, and the Young's modulus upon laminating the cured resin layer-1 and cured resin layer-2 in that order on the transparent organic polymer base is represented as $W_3$.

As examples of the Young's modulus $W_0$ according to an indentation hardness test (indentation tester/set indentation depth: 0.5 $\mu$m) of the transparent organic polymer base, a 188 $\mu$m-thick polyethylene terephthalate film (OFW, product of Teijin-DuPont Films) has a value of 6.5 GPa (660 kgf/mm$^2$), and a 100 $\mu$m polycarbonate film (PU-REACE, product of Teijin Chemicals, Ltd.) has a value of 4.3 GPa (440 kgf/mm$^2$).

If the Young's modulus of the cured resin layer-1 is greater than that of the transparent organic polymer base ($W_0 < W_1$), it will be difficult to guarantee the electrical characteristics (linearity) after edge writing durability of the transparent touch panel fabricated using a transparent conductive laminated body obtained by laminating the cured resin layer-1 and cured resin layer-2. If the Young's modulus of the cured resin layer-2 is smaller than that of the transparent organic polymer base ($W_0 > W_2$), the cured resin layer-2 will not be able to support the transparent conductive layer when the transparent conductive layer is formed on the cured resin layer-2, or when the transparent conductive layer is heat treated for crystallization, and fine creases will tend to appear in the transparent conductive layer. This will produce haze and the transparent conductive laminated body will be poorly suitable for use.

As condition (A) for the invention, the Young's modulus $W_3$ must be in the range of 1.9 GPa $\leq W_3 \leq$ 8.8 GPa (200 kgf/mm$^2 \leq W_3 \leq$ 900 kgf/mm$^2$), preferably 3.9 GPa $\leq W_3 \leq$ 8.8 GPa (400 kgf/mm$^2 \leq W_3 \leq$ 900 kgf/mm$^2$ and more preferably 4.4 GPa $\leq W_3 \leq$ 8.4 GPa (450 kgf/mm$^2 \leq W_3 \leq$ 850 kgf/mm$^2$. When the cured resin layer-1 and cured resin layer-2 are laminated in that order on the transparent polymer base with the Young's modulus $W_3$ in the range specified above, the properties of the cured resin layer-1 and cured resin layer-2 will be adequately exhibited and the different properties required for the transparent conductive laminated body and transparent touch panel will be sufficient.

That is, when the Young's modulus $W_3$ for lamination of the cured resin layer-1 and cured resin layer-2 on the transparent polymer base is less than 1.9 GPa (200 kgf/mm$^2$), the laminated cured resin layer-1 and cured resin layer-2 will not be able to support the transparent conductive layer when the transparent conductive film is formed or when the transparent conductive layer is heat treated for crystallization, and therefore fine creases will tend to appear in the transparent conductive layer, producing haze and rendering the transparent conductive laminated body unsuitable for use.

If the Young's modulus $W_3$ exceeds 8.8 GPa (900 kgf/mm$^2$), the edge writing durability of the transparent touch panel using the laminated body as a transparent conductive laminated body will be inferior, and occurrence of cracks will make it difficult to guarantee the electrical characteristics (linearity) of the transparent touch panel.

<Condition (B): Plastic deformation hardness relationship>

Condition (B) of the invention is that the plastic deformation hardness differs for the cured resin layer-1 and cured resin layer-2, and that the relationships $HV_2 > HV_0 > HV_1$ and $HV_2 > HV_3 > HV_1$ are satisfied.

Here, the plastic deformation hardness of the transparent organic polymer base is represented by $HV_0$, the plastic deformation hardness measured when the cured resin layer-1 is formed on the transparent organic polymer base is represented as $HV_1$, the plastic deformation hardness measured when the cured resin layer-2 is formed on the transparent organic polymer base is represented as $HV_2$, and the plastic deformation hardness when the cured resin layer-1 and cured resin layer-2 are laminated in that order on the transparent organic polymer base is represented as $HV_3$.

By laminating at least two cured resin layers with different plastic deformation hardnesses on a transparent polymer base in the relationship specified above, it is possible to exhibit the properties of each cured resin layer, i.e. the flexibility and low elasticity of the cured resin layer-1 and the toughness and high elasticity of the cured resin layer-2, in order to achieve improvement in the writing durability and edge writing durability required for transparent touch panels in recent years.

Condition (B) of the invention is that the relationships $HV_2 > HV_0 > HV_1$ and $HV_2 > HV_3 > HV_1$ are satisfied, and as an example of the plastic deformation hardness $HV_0$ according to an indentation hardness test (nanoindentation tester/set indentation depth: 0.5 $\mu$m) of the transparent organic polymer base, a 188 $\mu$m-thick polyethylene terephthalate

film (OFW, product of Teijin-DuPont Films) has a value of 539 MPa (55 kgf/mm$^2$), and a 100 $\mu$m polycarbonate film (PUREACE, product of Teijin Chemicals, Ltd.) has a value of 235 MPa (24 kgf/mm$^2$). If the plastic deformation hardness of the cured resin layer-1 is greater than that of the transparent organic polymer base ($HV_0 < HV_1$), it will be difficult to guarantee the electrical characteristics (linearity) after edge writing durability testing of the transparent touch panel fabricated using a transparent conductive laminated body obtained by laminating the cured resin layer-1 and cured resin layer-2.

If the plastic deformation hardness of the cured resin layer-2 is less than that of the transparent organic polymer base ($HV_0 > HV_2$), the cured resin layer-2 will not be able to support the transparent conductive layer, and creases will appear in the transparent conductive layer during formation of the transparent conductive layer or when the transparent conductive layer is crystallized by heat treatment. This will produce haze and the transparent conductive laminated body will be poorly suitable for use.

When the cured resin layer-1 and cured resin layer-2 are laminated with the aforementioned film thickness settings ($0.1 \leq d_2/d_1 \leq 3.0$, $0.5\ \mu m \leq d_1 \leq 10\ \mu m$, $0.5\ \mu m \leq d_2 \leq 10\ \mu m$), the resulting relationship is $HV_2 > HV_3 > HV_1$.

If the film thickness setting is outside of the range specified above, with a smaller film thickness of the cured resin layer-1 and a larger film thickness of the cured resin layer-2, the relationship of the plastic deformation hardness is $HV_2 \fallingdotseq HV_3$.

Also, when lamination is performed with a larger film thickness of the cured resin layer-1 and a smaller film thickness of the cured resin layer-2, the relationship of the plastic deformation hardness is $HV_3 \fallingdotseq HV_1$.

These cases will be similar to having only a cured resin layer-1 or cured resin layer-2 formed alone on the transparent organic polymer base, and therefore it will be difficult to guarantee the properties of the transparent conductive laminated body or transparent touch panel.

The plastic deformation hardness $HV_1$ of the cured resin layer-1 and the plastic deformation hardness $HV_2$ of the cured resin layer-2 according to the invention are the values measured at the cured resin layer surface with an indentation plastic deformation hardness tester (nanoindentation tester/set indentation depth: 0.5 $\mu$m), after forming the cured resin layer-1 or cured resin layer-2 to a thickness of 5 $\mu$m on the transparent organic polymer base (188 $\mu$m-thick polyethylene terephthalate film (OFW, product of Teijin-DuPont Films)).

<Condition (C): Hardness relationship>

Condition (C) of the invention is that the hardnesses of the cured resin layer-1 and cured resin layer-2 differ, that the relationships $DH_2 > DH_0 > DH_1$ and $DH_2 > DH_3 > DH_1$ are satisfied as measured with an indentation hardness tester (nanoindentation tester/set indentation depth: 0.5 $\mu$m), and that the hardness $DH_3$ is in the range of 98 MPa $\leq DH_3 \leq$ 392 MPa (10 kgf/mm$^2 \leq DH_3 \leq$ 40 kgf/mm$^2$) .

Here, the hardness of the transparent organic polymer base is represented as $DH_0$, the hardness measured upon forming the cured resin layer-1 on the transparent organic polymer base is represented as $DH_1$, the hardness measured upon forming the cured resin layer-2 on the transparent organic polymer base is represented as $DH_2$ and the hardness upon laminating the cured resin layer-1 and cured resin layer-2 in that order on the transparent organic polymer base is represented as $DH_3$.

As examples of the hardness $DH_0$ determined using an indentation hardness tester (indentation tester/set indentation depth: 0.5 $\mu$m) of the transparent organic polymer base, a 188 $\mu$m-thick polyethylene terephthalate film (OFW, product of Teijin-DuPont Films) has a value of 274 GPa (28 kgf/mm$^2$), and a 100 $\mu$m polycarbonate film (PUREACE, product of Teijin Chemicals, Ltd.) has a value of 167 GPa (17 kgf/mm$^2$).

If the hardness of the cured resin layer-1 is greater than that of the transparent organic polymer base ($DH_0 < DH_1$), it will be difficult to guarantee the electrical characteristics (linearity) after edge writing durability testing of the transparent touch panel fabricated using a transparent conductive laminated body obtained by laminating the cured resin layer-1 and cured resin layer-2.

If the hardness of the cured resin layer-2 is less than that of the transparent organic polymer base ($DH_0 > DH_2$), the cured resin layer-2 will not be able to support the transparent conductive layer, and creases will appear in the transparent conductive layer during formation of the transparent conductive layer or when the transparent conductive layer is crystallized by heat treatment. This will produce haze and the transparent conductive laminated body will be poorly suitable for use.

When the cured resin layer-1 and cured resin layer-2 are laminated with the aforementioned film thickness settings ($0.1 \leq d_2/d_1 \leq 3.0$, $0.5\ \mu m \leq d_1 \leq 10\ \mu m$, $0.5\ \mu m \leq d_2 \leq 10\ \mu m$), the relationship is $DH_2 > DH_3 > DH_1$.

If the film thickness setting is outside of the range specified above, with a smaller film thickness of the cured resin layer-1 and a larger film thickness of the cured resin layer-2, the hardness relationship is $DH_2 \fallingdotseq DH_3$.

Also, when lamination is performed with a larger film thickness of the cured resin layer-1 and a smaller film thickness of the cured resin layer-2, the hardness relationship is $DH_3 \fallingdotseq DH_1$. These cases will be similar to having only a cured resin layer-1 or cured resin layer-2 formed alone on the transparent organic polymer base, and therefore it will be difficult to guarantee the properties of the transparent conductive laminated body or transparent touch panel.

The hardness $DH_1$ of the cured resin layer-1 and the hardness $DH_2$ of the cured resin layer-2 referred to throughout the present specification are the values measured at the cured resin layer surface with an indentation hardness tester (nanoindentation tester/set indentation depth: 0.5 $\mu$m), after forming the cured resin layer-1 or cured resin layer-2 to a thickness of 5 $\mu$m on the transparent organic polymer base (188 $\mu$m-thick polyethylene terephthalate film (OFW, product of Teijin-DuPont Films)).

Condition (C) for the invention is preferably a hardness $DH_3$ where 98 MPa $\leq DH_3 \leq$ 392 MPa (10 kgf/mm$^2 \leq DH_3 \leq$ 40 kgf/mm$^2$), and more preferably where 147 MPa $\leq DH_3 \leq$ 343 MPa (15 kgf/mm$^2 \leq DH_3 \leq$ 35 kgf/mm$^2$). When the cured resin layer-1 and cured resin layer-2 are laminated in that order on the transparent polymer base with the hardness in the range specified above, the properties of the cured resin layer-1 and cured resin layer-2 will be adequately exhibited and the different properties required for the transparent conductive laminated body and transparent touch panel will be sufficient.

That is, when the hardness $DH_3$ for lamination of the cured resin layer-1 and cured resin layer-2 on the transparent polymer base is less than 98 MPa (10 kgf/mm$^2$), with the film thicknesses of the cured resin layer-1 and cured resin layer-2 in the prescribed ranges, the laminated cured resin layer-1 and cured resin layer-2 will not be able to support the transparent conductive layer when the transparent conductive layer is formed or when the transparent conductive layer is heat treated for crystallization, and therefore fine creases will tend to appear in the transparent conductive layer. This will produce haze, rendering the transparent conductive laminated body poorly suitable for use.

Also, when the hardness $DH_3$ for lamination of the cured resin layer-1 and cured resin layer-2 on the transparent polymer base is greater than 392 MPa (40 kgf/mm$^2$), with the film thicknesses of the cured resin layer-1 and cured resin layer-2 in the prescribed ranges, it will not be possible to ensure that the transparent touch panel employing the transparent conductive laminated body will exhibit the electrical characteristics (linearity) of the transparent touch panel, due to occurrence of cracks during edge writing durability testing.

<Relationship between Young's modulus, plastic deformation hardness and hardness (2)>

The transparent conductive laminated body of the invention satisfies at least one of the aforementioned conditions (A) to (C), but it also preferably satisfies at least one of the following conditions (D) to (F). The transparent conductive laminated body of the invention may also satisfy all of the conditions.

This can provide a transparent conductive laminated body that can yield a transparent touch panel with improved writing durability at edge regions of the transparent touch panel (edge writing durability), which is the object of the invention.

<Condition (D): Young's modulus relationship>

Condition (D) of the invention is that the Young's modulus $W_1$ satisfies the relationship 0.3 GPa $\leq W_1 \leq$ 4.9 GPa (30 kgf/mm$^2 \leq W_1 \leq$ 500 kgf/mm$^2$) and the Young's modulus $W_2$ satisfies the relationship 6.9 GPa $\leq W_2 \leq$ 9.8 GPa (700 kgf/mm$^2 \leq W_2 \leq$ 1000 kgf/mm$^2$), and preferably 0.5 GPa $\leq W_1 \leq$ 4.9 GPa (50 kgf/mm$^2 \leq W_1 \leq$ 500 kgf/mm$^2$), with the Young's modulus $W_2$ satisfying the relationship 6.9 GPa $\leq W_2 \leq$ 9.8 GPa (700 kgf/mm$^2 \leq W_2 \leq$ 1000 kgf/mm$^2$).

Within these ranges, the laminated body of the cured resin layer-1 and cured resin layer-2 will be able to satisfactorily support the transparent conductive layer during formation of the transparent conductive layer or when the transparent conductive layer is crystallized by heat treatment, thereby avoiding fine creases in the transparent conductive layer and preventing haze. Because no whitening or interference pattern is observed in the transparent conductive laminated body, it is suitable for use as a transparent conductive laminated body, while a transparent touch panel obtained using the transparent conductive laminated body has no cracking in the cured resin layer-2 during edge writing durability testing, so that the electrical characteristics (linearity) of the transparent touch panel can be adequately guaranteed.

<Condition (E): Plastic deformation hardness relationship>

Condition (E) of the invention is that the plastic deformation hardness $HV_1$ satisfies the relationship 9.8 MPa $\leq HV_1 \leq$ 196 MPa (1 kgf/mm$^2 \leq HV_1 \leq$ 20 kgf/mm$^2$), and the plastic deformation hardness $HV_2$ satisfies the relationship 588 MPa $\leq HV_2 \leq$ 1078 MPa (60 kgf/mm$^2 \leq HV_2 \leq$ 110 kgf/mm$^2$).

Within these ranges, it is possible to lessen damage to the transparent conductive layer by external force during writing durability testing. Furthermore, since the laminate of the cured resin layer-1 and cured resin layer-2 can support the transparent conductive layer, fine creases do not occur in the transparent conductive layer during transparent conductive layer formation or when the transparent conductive layer is crystallized by heat treatment, and therefore haze is also avoided. Since no whitening or interference pattern is observed in the transparent conductive laminated body, it is suitable for use as a transparent conductive laminated body.

When a transparent touch panel is manufactured using this type of transparent conductive laminated body as a movable electrode and is subjected to writing durability testing, the dot spacer formed on the fixed electrode base does not sink into the transparent conductive layer of the transparent conductive laminated body and destroy the transparent conductive layer, so that deterioration in the electrical characteristics (linearity) of the transparent touch panel is avoided and the transparent conductive laminated body does not exhibit cracks in the cured resin layer-2 during edge writing durability testing, thereby making it easier to guarantee the electrical characteristics (linearity) of the transparent touch panel.

<Condition (F): Hardness relationship>

Condition (F) of the invention is that the hardness $DH_1$ satisfies the relationship 9.8 MPa $\leq DH_1 \leq$ 14.7 MPa (1 kgf/mm$^2$ $\leq DH_1 \leq$ 15 kgf/mm$^2$), and the hardness $DH_2$ satisfies the relationship 245 MPa $\leq DH_2 \leq$ 490 MPa (25 kgf/mm$^2$ $\leq DH_2 \leq$ 50 kgf/mm$^2$) .

Within these ranges, it is possible to lessen damage to the transparent conductive layer by external force during writing durability testing. Furthermore, since the laminate of the cured resin layer-1 and cured resin layer-2 can support the transparent conductive layer, fine creases do not occur in the transparent conductive layer during transparent conductive layer formation or when the transparent conductive layer is crystallized by heat treatment, and therefore haze is also avoided. Also, since no whitening or interference pattern is observed in the transparent conductive laminated body, it is suitable for use as a transparent conductive laminated body.

When a transparent touch panel is manufactured using this type of transparent conductive laminated body as a movable electrode and is subjected to writing durability testing, the dot spacer formed on the fixed electrode base does not sink into the transparent conductive layer of the transparent conductive laminated body and destroy the transparent conductive layer, so that deterioration in the electrical characteristics (linearity) of the transparent touch panel is avoided and the transparent conductive laminated body does not exhibit cracks in the cured resin layer-2 during edge writing durability testing, thereby making it easier to guarantee the electrical characteristics (linearity) of the transparent touch panel.

<Condition (G): Plastic deformation hardness relationship>

According to the invention, any of the aforementioned conditions (D) to (F) are satisfied, but preferably also the following condition (G) is satisfied.

Condition (G) of the invention is that the plastic deformation hardness $HV_3$ satisfies the relationship 98 MPa $\leq HV_3 \leq$ 833 MPa (10 kgf/mm$^2$ $\leq HV_3 \leq$ 85 kgf/mm$^2$), and preferably the plastic deformation hardness $HV_3$ satisfies the relationship 196 MPa $\leq HV_3 \leq$ 833 MPa (20 kgf/mm$^2$ $\leq HV_3 \leq$ 85 kgf/mm$^2$) .

When the cured resin layer-1 and cured resin layer-2 are laminated in that order on the transparent polymer base with the hardness in the range specified above, the properties of the cured resin layer-1 and cured resin layer-2 will be adequately exhibited and the different properties required for the transparent conductive laminated body and transparent touch panel will be sufficient.

<Description of cured resin layer-1>

The cured resin layer-1 used for the invention preferably contains at least one component selected from the group consisting of (a) cured resins of urethane acrylate monomer and (b) synthetic rubber materials at 10 wt% or greater, and more preferably 20 wt% or greater.

The components (a) and (b) may be used alone or a plurality thereof may be used in combination to form the cured resin layer-1. When at least one component selected from the group consisting of (a) and (b) is present at 10 wt% or greater, it will be easier to satisfy at least one condition from among conditions (A) to (C) of the invention.

The urethane acrylate used as the monomer is obtained by reacting a polyol such as a diol with a polyfunctional isocyanate such as a diisocyanate, and then sealing the ends with a hydroxy-functional acrylate. As polyols there may be mentioned polyether polyols, polyester polyols, hydrocarbon polyols and the like. Copolymers of these polyols may be used, and the polyols may be used either alone or in combinations of two or more. The number-average molecular weight of the polyol is preferably about 200-10,000 and more preferably 500-5000. If the number-average molecular weight of the polyol is less than 200, it will be difficult to obtain a cured resin layer-1 that can achieve the object of the invention, and it will also be difficult to guarantee the electrical characteristics required for a transparent touch panel.

If the number-average molecular weight of the polyol is greater than 10,000, working of the cured resin layer-2 on the cured resin layer-1 will be hampered. Another problem that may result is inability to support the transparent conductive layer.

As examples of synthetic rubber materials there may be mentioned isoprene rubber, butadiene rubber, butyl rubber, ethylene-propylene rubber, chloroprene rubber, epichlorhydrin rubber, acryl rubber, urethane rubber, silicone rubber, fluorine rubber, styrenebutadiene rubber, chlorosulfonated rubber, chlorinated polyethylene, nitrile rubber, hydrogenated acrylonitrile-butadiene rubber, polysulfide rubber, acrylic acid ester copolymers, and various synthetic latexes. Block copolymers of these synthetic rubber materials may also be used, either alone or in combinations of two or more.

As curing resin components other than urethane acrylate and synthetic rubber materials there may be mentioned ionizing radiation-curing resins or thermosetting resins.

As examples of monomers that can yield ionizing radiation-curing resins there may be mentioned monofunctional and polyfunctional acrylates such as polyol acrylates, polyester acrylates, urethane acrylates other than those mentioned above, epoxy acrylates, modified styrene acrylate, melamine acrylate, silicon-containing acrylates and the like.

As examples of specific monomers there may be mentioned polyfunctional monomers such as trimethylolpropane trimethacrylate, trimethylolpropane/ethylene oxide-modified triacrylate, trimethylolpropane/propylene oxide-modified triacrylate, isocyanuric acid/ethylene oxide-modified triacrylate, pentaerythritol triacrylate, dipentaerythritol hexaacrylate, dimethyloltricyclodecane diacrylate, tripropylene glycol triacrylate, diethyleneglycol diacrylate, 1,6-hexanediol diacrylate, epoxy-modified acrylate, urethane-modified acrylate and the like.

These may be used alone, different types may be used in admixture, or in some cases, suitable amounts of alkoxysilane hydrolysates may be added. When polymerization is carried out by ionizing radiation, a publicly known photopolymerization initiator may be added in a suitable amount. If necessary, a photosensitizer may also be added in a suitable amount.

As photopolymerization initiators there may be mentioned acetophenone, benzophenone, benzoin, benzoyl benzoate and thioxanthones, and as photosensitizers there may be mentioned triethylamine and tri-n-butylphosphine.

As thermosetting resins there may be mentioned organosilane-based thermosetting resins with silane compounds such as methyltriethoxysilane and phenyltriethoxysilane as monomers, or melamine-based thermosetting resins with etherified methylolmelamine and the like as monomers, isocyanate-based thermosetting resins, phenol-based thermosetting resins and epoxy-curing resins. These curing resins may be used alone or in combinations of two or more. If necessary, they may be used in admixture with thermoplastic resins. For heat crosslinking, a publicly known reaction accelerator or curing agent may be added in a suitable amount.

As examples of reaction accelerators there may be mentioned triethylenediamine, dibutyltin dilaurate, benzylmethylamine and pyridine. As examples of curing agents there may be mentioned methylhexahydrophthalic anhydride, 4,4'-diaminodiphenylmethane, 4,4'-diamino-3,3'-diethyldiphenylmethane and diaminodiphenylsulfone.

As methods of forming the cured resin layer-1 there may be mentioned methods employing a publicly known coating machine such as a doctor knife, bar coater, gravure roll coater, curtain coater, knife coater, spin coater or the like, as well as spray methods and dipping methods. As an actual coating method there may be mentioned a method of dissolving the monomer compound in an organic solvent and adjusting the concentration and viscosity of the coating solution for coating onto the transparent organic polymer base, and then curing the layer by irradiation or heat treatment.

As dilution solvents there are preferred water, alcoholic and hydrocarbon solvents, such as ethanol, isopropyl alcohol, butanol, 1-methoxy-2-propanol, hexane, cyclohexane, ligroin and the like.

When a synthetic rubber material is used, preferred solvents are xylene, toluene and ketones such as methyl ethyl ketone and methyl isobutyl ketone. In addition, there may be used polar solvents such as cyclohexanone, butyl acetate and isobutyl acetate. These may be used alone, or two or more thereof may be used as a mixed solvent.

For roughening of the surface of the cured resin layer-1 and adjustment of the hardness, fine particles with average primary particle sizes of 0.001 $\mu$m to 5 $\mu$m may be used alone, or a combination of two different types of fine particles with different average primary particle sizes may be used, for addition to the cured resin layer-1.

<Description of cured resin layer-2>

The cured resin layer-2 used for the invention may be an ionizing radiation-curing resin or thermosetting resin.

As ionizing radiation-curing resins or thermosetting resins there may be used the same curing resin components mentioned in the description of the cured resin layer-1 above, so long as at least one condition from among conditions (A) to (C) of the invention is satisfied.

When either the movable electrode base surface or the fixed electrode base surface is flat, a Newton ring is sometimes observed due to interference of reflected light from the movable electrode base surface and reflected light from the fixed electrode base surface when the transparent touch panel is manufactured. The surface of the cured resin layer-1 or cured resin layer-2 may be roughened to avoid a Newton ring by optical scattering of the reflected light. As the method of roughening the surface of the cured resin layer-1 or cured resin layer-2, fine particles with primary particle sizes of 0.001 $\mu$m to 5 $\mu$m may be used alone, or a combination of two different types of fine particles with different primary particle sizes may be used for addition to the cured resin layer-1 or cured resin layer-2. The preferred roughening range for roughening by such a method is a ten-point height of irregularities (Rz) for the cured resin layer-2 of between 100 nm and 1000 nm, more preferably between 100 nm and 800 nm and even more preferably between 150 nm and 500 nm, as defined by JIS B0601-1982. The arithmetic mean roughness (Ra) as defined by JIS B0601-1994 is between 50 nm and 500 nm, while the haze for the transparent polymer base, cured resin layer-1 and cured resin layer-2 as defined by JIS B7361 is no greater than 5%.

<Transparent organic polymer base>

The transparent organic polymer base used for the invention may be a thermoplastic or thermosetting organic polymer compound with excellent transparency, formed into a film. The organic polymer compound is not particularly restricted so long as it is a transparent organic polymer with excellent heat resistance.

As examples there may be mentioned polyester-based resins such as polyethylene terephthalate, polyethylene-2,6-naphthalate and polydiallyl phthalate, and polycarbonate resins, polyethersulfone resins, polysulfone resins, polyallylate resins, acryl resins, cellulose acetate resins, cycloolefin polymers and the like. These may of course be used as either homopolymers or copolymers, or alone or in blends.

Such transparent organic polymer bases can be satisfactorily molded by ordinary melt extrusion methods or solution casting methods, and if necessary the molded transparent organic polymer film may be subjected to uniaxial stretching or biaxial stretching for increased mechanical strength, or for enhanced optical function.

When the transparent conductive laminated body of the invention is used as a movable electrode base for a transparent touch panel, the base is preferably in the form of a film with a thickness of 75-400 $\mu$m, from the standpoint of strength in order to maintain flexibility and flatness for operation of the transparent touch panel as a switch. For use as a fixed electrode base, a sheet with a thickness of 0.2-4.0 mm is preferred from the standpoint of strength in order to maintain flatness, but a film with a thickness of 50-400 $\mu$m may also be attached to another sheet for a construction with a total thickness of 0.2-4.0 mm. As an alternative structure, a film with a thickness of 50-400 $\mu$m may be attached to a display surface.

When the transparent conductive laminated body of the invention is used as the movable electrode base of a transparent touch panel, there may be used as the fixed electrode base an organic polymer film base, a glass panel or a laminated base with a transparent conductive layer formed thereon. From the standpoint of strength and weight of the transparent touch panel, the thickness of the fixed electrode base consisting of a single layer or laminate is preferably 0.2-4.0 mm.

Recently, a new type of transparent touch panel has been developed having a construction wherein a polarizing plate or a laminate of a polarizing plate with a phase contrast film is provided on the input side (user side) of the transparent touch panel. The advantages of this construction are that the optical function of the polarizing plate or the laminate of the polarizing plate and phase contrast film reduces the reflectance of extraneous light in the transparent touch panel to less than half, thereby enhancing the contrast of the display when the transparent touch panel is mounted.

Since polarized light passes through the transparent conductive laminated body in this type of transparent touch panel, it is preferred to use a transparent organic polymer film having excellent optical isotropy, and specifically, the in-plane retardation value Re as represented by Re = $(n_x-n_y) \times d(nm)$, where $n_x$ is the refractive index in the slow axis direction in the plane of the base, $n_y$ is the refractive index in the fast axis direction and d(nm) is the thickness of the base, is preferably no greater than 30 nm, and more preferably no greater than 20 nm. The in-plane retardation value of the base is typically the value at a wavelength of 590 nm as measured using a spectroscopic ellipsometer (M-150 by JASCO Corp.).

The in-plane retardation value of the transparent conductive base is extremely important for use of this type of transparent touch panel wherein the polarized light passes through the transparent conductive laminated body, but the three-dimensional refractive index property of the transparent conductive base, i.e. the K value represented by K={$(n_x+n_y)/2-n_z$}$\times$d, where $n_x$ is the refractive index in the slow axis direction in the plane of the base, $n_y$ is the refractive index in the fast axis direction and $n_z$ is the refractive index in the film thickness direction of the base, is also preferably from -250 to +150 nm, and more preferably in the range from -200 to +100 nm in order to obtain excellent viewing angle properties for the transparent touch panel.

Examples of transparent organic polymer bases exhibiting such excellent properties of optical isotropy include molded bases formed as films from polycarbonates, amorphous polyallylates, polyethersulfones, polysulfones, triacetylcellulose, diacetylcellulose, cycloolefin polymers and their modified forms or copolymers with different materials, molded bases of thermosetting resins such as epoxy-based resins, and molded bases formed as films or sheets of ultraviolet curing resins such as acryl resins.

From the viewpoint of moldability, production cost and thermal stability, there may be mentioned as most preferable molded bases obtained from polycarbonates, amorphous polyallylates, polyethersulfones, polysulfones, cycloolefin polymers and their modified forms or copolymers with different materials.

More specifically, as polycarbonates there are preferably used molded bases of polymers and copolymers having as a monomer unit at least one component selected from the group consisting of bisphenol A, 1,1-di(4-phenol)cyclohexylidene, 3,3,5-trimethyl-1,1-di(4-phenol)cyclohexylidene, fluorene-9,9-di(4-phenol) and fluorene-9,9-di(3-methyl-4-phenol), or mixtures thereof, as polycarbonates with average molecular weights in the range of about 15,000-100,000 (commercially available as, for example, PANLITE by Teijin Chemicals, Ltd. or Apec HT by Bayer Ltd.).

Examples of amorphous polyallylates include the commercially available molded bases ELMEC by Kaneka Corp. (formerly Kanebo Chemical Industries), U-POLYMER by Unitika, Ltd., and ISARIL by Isonova S.r.l.

Examples of cycloolefin polymers include the commercially available molded bases ZEONOAH by Zeon Corp. and ARTON by JSR Corp.

The process for production of molded bases using these polymer compounds may be a melt extrusion process, solution casting process, injection molding process or the like, but from the standpoint of obtaining excellent optical isotropy, solution casting or melt extrusion is most preferably used for molding.

<Cured resin layer-3>

According to the invention, a cured resin layer-3 may be formed between the cured resin layer-2 and the transparent conductive layer described hereunder in order to improve the optical characteristics such as the total light transmittance. The cured resin layer-3 used for the invention may be an ionizing radiation-curing resin or thermosetting resin.

The method of forming the cured resin layer-3 may be the same method used for the cured resin layer-1 described above.

As ionizing radiation-curing resins there may be mentioned monofunctional and polyfunctional acrylate-based ionizing radiation-curing resins such as polyol acrylates, polyester acrylates, urethane acrylates, epoxy acrylates, modified styrene acrylates, melamine acrylates and silicon-containing acrylates.

As thermosetting resins there may be mentioned organosilane-based thermosetting resins such as methyltriethoxysilane and phenyltriethoxysilane, or melamine-based thermosetting resins with etherified methylolmelamine and the like, isocyanate-based thermosetting resins, phenol-based thermosetting resins and epoxy-curing resins.

These ionizing radiation-curing resins and thermosetting resins may be used alone or in combinations of two or more. If necessary, they may be used in admixture with thermoplastic resins. For heat crosslinking, a publicly known reaction accelerator or curing agent may be added in a suitable amount. As examples of reaction accelerators there may be mentioned triethylenediamine, dibutyltin dilaurate, benzylmethylamine and pyridine. As examples of curing agents there may be mentioned methylhexahydrophthalic anhydride, 4,4'-diaminodiphenylmethane, 4,4'-diamino-3,3'-diethyldiphenylmethane and diaminodiphenylsulfone.

The alkoxysilane forms a cured resin layer by hydrolysis and condensation polymerization. Examples of alkoxysilanes include tetramethoxysilane, tetraethoxysilane, methyltrimethoxysilane, methyltriethoxysilane, dimethyldimethoxysilane, γ-glycidoxypropyltrimethoxysilane, β-(3, 4epoxycyclohexyl)ethyltrimethoxysilane, vinyltrimethoxysilane, N-β(aminoethyl)γ-aminopropyltrimethoxysilane, N-β(aminoethyl)γ-aminopropyldimethoxysilane, γ-aminopropyltriethoxysilane and the like.

From the viewpoint of mechanical strength, cohesion and solvent resistance of the layer, these alkoxysilanes are preferably used in mixtures of two or more, and especially from the viewpoint of solvent resistance, the weight ratio of the alkoxysilane in the total composition is in the range of 0.5-40%, and an alkoxysilane with an amino group in the molecule is preferably included.

Even when the alkoxysilane is a monomer it may be suitably oligomerized by hydrolysis and dehydrating condensation, but normally it will be dissolved and diluted in an organic solvent to obtain a coating solution for coating onto the base. The coating layer formed on the base undergoes hydrolysis by moisture in the air, and then becomes crosslinked by dehydrating condensation.

An appropriate degree of heat treatment is usually necessary for crosslinking, and heat treatment for several minutes at a temperature of 100°C or above is preferred in the coating step. In some cases, the heat treatment may be combined with irradiation of the coating layer with active light rays such as ultraviolet rays to further increase the crosslinking degree.

As organic solvents for dilution there are preferred alcoholic and hydrocarbon solvents, such as ethanol, isopropyl alcohol, butanol, 1-methoxy-2-propanol, hexane, cyclohexane, ligroin and the like. In addition, there may be used polar solvents such as xylene, toluene, cyclohexanone, methyl isobutyl ketone and isobutyl acetate. These may be used alone, or two or more thereof may be used as a mixed solvent.

For adjustment of the refractive index of the cured resin layer-3, ultrafine particles C composed of a metal oxide or metal fluoride with a mean primary particle size of no greater than 100 nm, or a fluorine-based resin, may be used alone or in combinations of two or more, in admixture with the cured resin layer-3. The refractive index of the cured resin layer-3 is preferably smaller than the refractive index of the cured resin layer-2, and the refractive index is preferably 1.20-1.55 and more preferably 1.20-1.45. The film thickness of the cured resin layer-3 is preferably 0.05-0.5 μm and more preferably 0.05-0.3 μm.

The mean primary particle size of the ultrafine particles C is preferably no greater than 100 nm and more preferably no greater than 50 nm. By limiting the primary particle size of the ultrafine particles C to no greater than 100 nm, it is possible to obtain satisfactory optical characteristics without whitening of the cured resin layer-3.

Examples of ultrafine particles C include ultrafine particles of metal oxides or metal fluorides such as $Bi_2O_3$, $CeO_2$, $In_2O_3$, $(In_2O_3/SnO_2)$, $HfO_2$, $La_2O_3$, $MgF_2$, $Sb_2O_5$, $(Sb_2O_5/SnO_2)$, $SiO_2$, $SnO_2$, $TiO_2$, $Y_2O_3$, ZnO or $ZrO_2$, and preferred are ultrafine particles of metal oxides or metal fluorides with refractive indexes of 1.55 or lower, such as $MgF_2$ and $SiO_2$.

The content of the ultrafine particles C is 10-400 parts by weight, preferably 30-400 parts by weight and more preferably 50-300 parts by weight with respect to 100 parts by weight of the thermosetting resin and/or ionizing radiation-curing resin. If the content of ultrafine particles C exceeds 400 parts by weight the strength and cohesion of the cured resin layer-3 may be insufficient, while if the content of ultrafine particles C is less than 10 parts by weight, it may not be possible to achieve the prescribed refractive index.

Examples of fluorine-based resins include those comprising 5-70 wt% of a fluorine atom-containing monomer component such as vinylidene fluoride, hexafluoropropylene, tetrafluoroethylene, fluoroethylene, trifluoroethylene, chlorotrifluoroethylene, 1,2-dichloro-1,2-difluoroethylene, 2-bromo-3,3,3-trifluoroethylene, 3-bromo-3,3-difluoropropylene, 3,3,3-trifluoropropylene, 1,1,2-trichloro-3,3,3-trifluoropropylene and α-trifluoromethacrylic acid.

The content of the fluorine-based resin is 50-300 parts by weight, preferably 100-300 parts by weight and more preferably 150-250 parts by weight with respect to 100 parts by weight of the thermosetting resin and/or ionizing radiation-curing resin. If the fluorine-base resin content exceeds 300 parts by weight the strength and cohesion of the cured resin layer-3 may be insufficient, while if the fluorine-based resin content is less than 50 parts by weight, it may not be possible to achieve the prescribed refractive index.

<Optical interference layer>

According to the invention, an optical interference layer may be formed between the cured resin layer-2 and the transparent conductive layer described hereunder to control the refractive index and increase the transparency.

The optical interference layer used for the invention is composed of at least one high-refractive-index layer and at least one low-refractive-index layer. Two or more units of high-refractive-index and low-refractive-index layer combinations may also be used. When the optical interference layer is composed of one high-refractive-index layer and one low-refractive-index layer, the film thickness of the optical interference layer is preferably 30 nm-300 nm and more preferably 50 nm-200 nm.

The high-refractive-index layer of the optical interference layer of the invention is a layer formed by hydrolysis and condensation polymerization of a metal alkoxide, and is a layer composed of a component obtained by hydrolysis and condensation polymerization of one or more metal alkoxides, and ultrafine particles C consisting of a metal oxide or metal fluoride with a mean primary particle size of no greater than 100 nm described for the cured resin layer-3.

The metal alkoxide used for the invention may be, for example, a titanium alkoxide, zirconium alkoxide, alkoxysilane or the like.

As examples of titanium alkoxides there may be mentioned titanium tetraisopropoxide, tetra-n-propylorthotitanate, titanium tetra-n-butoxide and tetrakis(2-ethylhexyloxy)titanate.

As examples of zirconium alkoxides there may be mentioned zirconium tetraisopropoxide and zirconium tetra-n-butoxide.

As alkoxysilanes there may be mentioned the same ones referred to above for the cured resin layer-3.

To the high-refractive-index layer there may also be added in an appropriate amount one or more types of ultrafine particles C with a mean primary particle size of no greater than 100 nm, composed of the metal oxide or metal fluoride mentioned for the cured resin layer-3. Addition of the ultrafine particles C can adjust the refractive index of the high-refractive-index layer.

When ultrafine particles C are added to the high-refractive-index layer, the weight ratio of the ultrafine particles C and the metal alkoxide is preferably 0:100-66.6:33.3 and more preferably 0:100-60:40. The weight ratio of the ultrafine particles C and the metal alkoxide preferably does not exceed 66.6:33.3, because the strength and cohesion of the optical interference layer will be insufficient for the requirements.

The thickness of the high-refractive-index layer is preferably 15-250 nm and more preferably 30-150 nm.

The refractive index of the high-refractive-index layer is preferably larger than the refractive index of the low-refractive-index layer and the cured resin layer-2, and the difference is preferably at least 0.2.

The low-refractive-index layer of the optical interference layer of the invention is one comprising a layer composed of an ionizing radiation-curing resin or a thermosetting resin as described for the cured resin layer-3, and one or more types of ultrafine particles C with a mean primary particle size of no greater than 100 nm, composed of the metal oxide or metal fluoride described for the cured resin layer-3 above, added to the layer in an appropriate amount. The thickness of the low-refractive-index layer is preferably 15-250 nm and more preferably 30-150 nm.

<Fine particles B>

Fine particles B may be added to the cured resin layer-3, or to either or both the high-refractive-index layer and low-refractive-index layer of the optical interference layer. When added to the cured resin layer-3, the fine particles B used have a mean primary particle size of at least 1.1 times the film thickness and a mean primary particle size of no greater than 1.2 $\mu$m, and when added to the optical interference layer, the fine particles B used have a mean primary particle size of at least 1.1 times the total film thickness of the optical interference layer and a mean primary particle size of no greater than 1.2 $\mu$m.

This will roughen the surface of the transparent conductive layer, and can reduce malfunctioning caused by attraction between the transparent conductive layer surface of the fixed electrode base and the transparent conductive layer surface of the movable electrode base.

Also, by controlling the mean primary particle size of the added fine particles B it is possible to roughen the transparent conductive layer surface in a range that does not produce glare from scattering of the three primary color RGB light from the liquid crystals.

If the amount of fine particles B added is in a range of 0.01-0.5 wt% of the cured resin component composing the layer to which the fine particles B are added, it will be possible to form a satisfactory optical interference layer with no whitening, and without impairing the effect of preventing malfunctioning of the transparent touch panel caused by attraction between the transparent conductive layer surface of the movable electrode base and the transparent conductive layer surface of the fixed electrode base.

If the fine particles B are added in excess to either of the cured resin layer-3 or the high-refractive-index layer or low-refractive-index layer of the optical interference layer, the added fine particles B will tend to be shed off, lowering the cohesion of the optical interference layer or adhesion between the cured resin layer-3 and the cured resin layer-2, and impairing the writing durability required for the touch panel.

As examples of fine particles B there may be mentioned silica fine particles, crosslinked acrylic fine particles and crosslinked polystyrene fine particles.

When added to the cured resin layer-3, the fine particles B used have a mean primary particle size of at least 1.1 times the film thickness and a mean primary particle size of no greater than 1.2 $\mu$m, and when added to the optical interference layer, the fine particles B used have a mean primary particle size of at least 1.1 times the total film thickness of the optical interference layer and a mean primary particle size of no greater than 1.2 $\mu$m.

If the mean primary particle size of the fine particles B is less than 1.1 times the film thickness of the cured resin layer-3 or the total thickness of the optical interference layer, it will be difficult to roughen the transparent conductive layer surface. On the other hand, if the mean primary particle size of the fine particles B is greater than 1.2 $\mu$m, when the transparent touch panel employing the transparent conductive laminated body having such fine particles added is mounted in a high-definition color liquid crystal screen and the liquid crystal screen is observed through the transparent touch panel, the liquid crystal screen will tend to exhibit glare and have reduced display quality.

If the mean primary particle size of the fine particles B is greater than 1.2 $\mu$m, the mean primary particle size will be excessively larger than the film thickness of the cured resin layer-3 to which the fine particles B are added or the total thickness of the optical interference layer, and therefore the added fine particles will tend to shed off, making it difficult to ensure reliable properties including the writing durability required for the transparent touch panel.

When the fine particles B are added to the cured resin layer-3 or to either or both the high-refractive-index and low-refractive-index layers of the optical interference layer, it is preferred for substantially no fine particles to be added.to the cured resin layer-2.

<Metal compound layer>

According to the invention, a metal compound layer may be provided between the cured resin layer-2 and transparent conductive layer, in contact with the transparent conductive layer. The film thickness of the metal compound layer is thinner than the film thickness of the transparent conductive layer, and is between 0.5 nm and 10.0 nm, preferably between 1.0 nm and 7.0 nm and more preferably between 1.0 nm and 5.0 nm. By lamination of the cured resin layer-2, the thickness-controlled metal compound layer and the transparent conductive layer in that order, it is possible to vastly improve the cohesion and enhance the writing durability and edge writing durability required for transparent touch panels in recent years. If the thickness of the metal compound layer is greater than 10.0 nm, the metal compound layer will begin to exhibit the mechanical properties of a continuous body, thereby hampering efforts to improve the edge writing durability required for a transparent touch panel. On the other hand, a film thickness of less than 0.5 nm will not only impede control of the film thickness, but will also make it difficult to adequately express cohesion between the cured resin layer-2 and transparent conductive layer or to improve the edge writing durability.

As examples of metal compound layers there may be mentioned metal oxides such as silicon oxide, aluminum oxide, titanium oxide, magnesium oxide, zinc oxide, indium oxide and tin oxide.

These metal compound layers may be formed by publicly known methods, and for example, DC magnetron sputtering, RF magnetron sputtering, ion plating, vapor deposition, pulse laser deposition methods and the like, as well as physical vapor deposition (PVD) employing a combination thereof, may be used, but DC magnetron sputtering is the preferred method from the viewpoint of industrial productivity for forming a metal compound layer with uniform thickness over a large area. In addition to physical vapor deposition (PVD) there may be used chemical methods such as chemical vapor deposition (CVD) and sol-gel methods, but sputtering is still preferred from the viewpoint of controlling the thickness of the metal compound layer.

The target used for sputtering is preferably a metal target, and reactive sputtering methods are widely employed. This is because the oxides, nitrides and oxynitrides of elements used in metal compound layers are insulators, and therefore DC magnetron sputtering often cannot be applied.

In recent years, there have been developed power sources that simultaneously discharge two cathodes and minimize formation of insulators on the target, to allow application of quasi-RF magnetron sputtering.

According to the present invention, formation is accomplished by a production process wherein, if the metal compound layer is formed by DC magnetron sputtering using a metal target, the pressure (back pressure) in the vacuum chamber used to form the metal compound layer is first limited to no greater than $1.3 \times 10^{-4}$ Pa, and then an inert gas and oxygen are introduced. The pressure in the vacuum chamber used to form the metal compound layer is preferably first limited to no greater than $1.3 \times 10^{-4}$ Pa because this can reduce the effect of molecular species that may remain in the vacuum chamber and affect the process of forming the metal compound layer. The pressure is more preferably no greater than $5 \times 10^{-5}$ Pa and even more preferably no greater than $2 \times 10^{-5}$ Pa.

The inert gas introduced next may be, for example, He, Ne, Ar, Kr or Xe, and inert gases with larger atomic weights presumably create less damage in the formed film and result in improved surface flatness. However, Ar is preferred from the viewpoint of cost. In order to adjust the oxygen concentration incorporated into the film, oxygen is added to the inert gas at $1.3 \times 10^{-3}$-$7 \times 10^{-2}$ Pa in terms of partial pressure. Also, $O_3$, $N_2$, $N_2O$, $H_2O$, $NH_3$ and the like may be added in addition to oxygen depending on the purpose.

Also according to the invention, formation is accomplished by a production process wherein the water partial pressure in the vacuum chamber used to form the metal compound layer is limited to no greater than $1.3 \times 10^{-4}$ Pa, and then an inert gas and oxygen are introduced. The water partial pressure is more preferably controlled to no greater than $4 \times 10^{-5}$ Pa and even more preferably no greater than $2 \times 10^{-5}$ Pa.

In order to reduce stress inside the metal compound layer by incorporation of hydrogen into the layer, water may be purposely introduced in a range of $1.3 \times 10^{-4}$ to $3 \times 10^{-2}$ Pa. This adjustment may be accomplished using a variable leak bulb or a mass flow controller for introduction of water after formation of the vacuum. It can also be accomplished by controlling the back pressure of the vacuum chamber.

When the water partial pressure is determined according to the invention, a differential pumping in-process monitor may be used. Alternatively, a quadrupole mass spectrometer having a wide dynamic range and allowing measurement even under a pressure of about 0.1 Pa may be used. It is usually water that forms the pressure in a vacuum of about $1.3 \times 10^{-5}$ Pa. Thus, the value measured with a vacuum gauge may be considered directly as the water partial pressure.

Since a polymer film is used as the base according to the invention, the base temperature cannot be increased above the softening point of the polymer film. Consequently, the temperature of the polymer film must be kept from about no higher than room temperature and below the softening point in order to form the metal compound layer. In the case of a typical polymer film such as polyethylene terephthalate, the metal compound layer is preferably formed with the base temperature kept at a temperature of no higher than 80°C when no special treatment is carried out. The base temperature is more preferably no higher than 50°C and even more preferably no higher than 20°C. Even with a heat-resistant polymer, the formation is preferably carried out with a base temperature of no higher than 80°C, more preferably no higher than 50°C and even more preferably no higher than 20°C from the viewpoint of controlling out-gas from the polymer film.

<Transparent conductive layer>

According to the invention, a transparent conductive layer is provided in contact with the cured resin layer-2, cured resin layer-3, optical interference layer or metal compound layer. Providing the transparent conductive layer in contact with the cured resin layer-2 will enhance the mechanical properties such as writing durability of the transparent conductive laminated body. The transparent conductive layer comprises an ITO layer containing 2-20 wt% tin oxide or a tin oxide layer doped with antimony or fluorine.

The method of forming the transparent conductive layer may be a PVD method such as sputtering, vapor deposition or ion plating, a coating method, a printing method or a CVD method, but a PVD or CVD method is preferred. In the case of a PVD or CVD method, the thickness of the transparent conductive layer is preferably 5-50 nm and more preferably 10-30 nm from the standpoint of transparency and conductivity. If the thickness of the transparent conductive layer is less than 10 nm the time-dependent stability of the resistance value will tend to be inferior, while if it is greater than 30 nm, the transmittance of the transparent conductive laminated body will be undesirably reduced.

Because of the need for reduced power consumption and circuit processing of the transparent touch panel, the transparent conductive layer used preferably exhibits a surface resistance value in the range of 100-2000 $\Omega/\square$ ($\Omega$/sq) and more preferably 140-2000 $\Omega/\square$ ($\Omega$/sq), with a film thickness of 10-30 nm. More preferred is a film composed mainly of crystalline (essentially 100% crystal phase) indium oxide. Particularly preferred is a layer composed mainly of crystalline indium oxide with a crystal grain size of no greater than 3000 nm. A crystal grain size of greater than 3000 nm is not preferred because the writing durability will be impaired. The crystal grain size referred to here is defined as the maximum diagonal or diameter in each region of polygonal or elliptical crystal grains, as observed under a transmission electron microscope (TEM).

<Hard coat layer>

When the transparent conductive laminated body of the invention is used as a movable electrode base, a hard coat layer is preferably formed on the side of the transparent touch panel on which external pressure is applied during operation, i.e. the side of the transparent organic polymer base opposite the transparent conductive layer. As materials for formation of the hard coat layer there may be used organosilane-based thermosetting resins such as methyltriethoxysilane and phenyltriethoxysilane, or melamine-based thermosetting resins such as etherified methylolmelamine, and polyfunctional acrylate-based ultraviolet curing resins such as polyol acrylate, polyester acrylate, urethane acrylate and epoxy acrylate, if necessary with admixture of ultrafine particles of $SiO_2$, $MgF_2$ or the like. The thickness of the hard coat layer is preferably 2-5 $\mu$m from the standpoint of flexibility and abrasion resistance.

The hard coat layer may be formed by a coating method. As an actual coating method there may be mentioned a method of dissolving the compound in an organic solvent and adjusting the concentration and viscosity of the coating solution for coating onto the transparent organic polymer base, and then curing the layer by irradiation or heat treatment. Examples of coating methods include microgravure coating, Meyer bar coating, direct gravure coating, reverse roll coating, curtain coating, spray coating, comma coating, die coating, knife coating and spin coating.

The hard coat layer is laminated directly onto the transparent organic polymer base, or via a suitable anchor layer. As preferred examples for the anchor layer, there may be mentioned a layer having the function of improving cohesion between the hard coat layer and the transparent organic polymer base, a phase compensation layer such as layer having a three-dimensional refractive index property with a negative K value, a layer having the function of preventing permeation of moisture or air or the function of absorbing moisture or air, a layer having the function of absorbing ultraviolet rays or infrared rays, or a layer having the function of reducing the electrostatic property of the base.

Examples

The present invention will now be explained in detail by examples, with the understanding that the invention is not limited to the examples in any way.

Throughout the following examples, the Young's modulus measuring method based on indentation hardness testing, the plastic deformation hardness measuring method based on indentation hardness testing, the hardness measuring method based on indentation hardness testing, the metal compound layer film thickness measuring method, the linearity measuring method, the edge writing durability test method and the writing durability test method were as follows.

<Young's modulus measuring-method based on indentation hardness test>

The Young's modulus was measured with the following measuring apparatus and measuring conditions. Measuring apparatus: ENT-1100a nanoindentation tester (product of Elionix Co., Ltd.)

    Measuring surface: Cured resin layer surface
    Measuring conditions:
    Indentation depth setting test
    Setting depth: 0.5 $\mu$m
    Divided in 250 steps
    Test load holding time: 1 sec
    Indenter: Triangular pyramid (edge angle: 115°)
    5-point continuous automatic measurement for each sample
    Young's modulus calculation method:

The average value for the Young's modulus with 5-point continuous measurement was calculated using the following formula, based on a load-deformation graph.

$$Young's\ Modulus\ W = 1.8129 \cdot 10^{-1} \cdot \frac{1}{h_1} \cdot \frac{dP}{dh} \cdot 0.0098 \quad (GPa)$$

P: Load, δ h: Deformation
The Young's modulus is the combined elastic modulus as a sum of the elastic modulus of the sample and the elastic modulus of the indenter.

<Plastic deformation hardness measuring method using indentation hardness tester>

The plastic deformation hardness was measured with the following measuring apparatus and measuring conditions.

Measuring apparatus: ENT-1100a nanoindentation tester (product of Elionix Co., Ltd.)
Measuring surface: Cured resin layer surface
Measuring conditions:
Indentation depth setting test
Setting depth: 0.5 $\mu$m
Divided in 250 steps
Test load holding time: 1 sec
Indenter: Triangular pyramid (edge angle: 115°) 5-point continuous automatic measurement for each sample
Plastic deformation hardness calculation method

The average value for the plastic deformation hardness with 5-point continuous measurement was calculated using the following formula, based on a load-deformation graph. The tangent at the maximum deformation of the curve was established in the absence of the load, and the degree of plastic deformation was isolated from the slope to determine the hardness corresponding to the Vickers hardness. The actual Vickers value differs slightly depending on the shape of the indenter.

$$Plastic\ deformation\ hardness\ HV = 3.7926 \cdot 10^{-2} \cdot \frac{P_{max}}{hr^2} \cdot 9.8 \quad (MPa)$$

Pmax: Load
hr: Deformation with load of 0 at the tangent at the maximum deformation of the curve

<Hardness measuring method using indentation hardness tester>

The hardness was measured with the following measuring apparatus and measuring conditions.

Measuring apparatus: ENT-1100a nanoindentation tester (product of Elionix Co., Ltd.)
Measuring surface: Cured resin layer surface
Measuring conditions:
Indentation depth setting test
Setting depth: 0.5 $\mu$m
Divided in 250 steps
Test load holding time: 1 sec
Indenter: Triangular pyramid (edge angle: 115°) 5-point continuous automatic measurement for each sample

Hardness calculation method:

The average value for the plastic deformation hardness with 5-point continuous measurement was calculated using the following formula, based on a load-deformation graph. The tangent at the maximum deformation of the curve was established in the absence of the load, and the degree of plastic deformation was isolated from the slope to determine the hardness corresponding to the Vickers hardness. The actual Vickers value differs slightly depending on the shape of the indenter.

$$Hardness\ DH = 3.7926 \cdot 10^{-2} \cdot \frac{P_{max}}{h_{max}^{2}} \cdot 9.8 \quad (MPa)$$

Pmax: Load
hmax: Maximum deformation of curve in absence of load

<Metal compound layer thickness measuring method>

After forming the metal compound layer, an RIX1000 fluorescent X-ray analyzer (product of Rigaku Corp.) was used to measure the thickness of the metal compound layer.

<Linearity measuring method>

A direct-current voltage of 5 V was applied between parallel electrodes on the movable electrode base or on the fixed electrode base. The voltage was measured at a spacing of 5 mm in the direction vertical to the parallel electrodes. The following formula was used, where $E_A$ is the voltage at position A at the start of measurement, $E_B$ is the voltage at position B at the end of measurement, $E_x$ is the measured voltage at distance X from position A, $E_T$ is the theoretical value thereof, and L is the linearity.

$$E_T = (E_B - E_A) \times X/(B-A) + E_A$$

$$L(\%) = (|E_T - E_X|)/(E_B - E_A) \times 100$$

<Edge writing durability test method>

A position approximately 2 mm from the insulating layer around the movable electrode base of the fabricated transparent touch panel was situated parallel to the insulating layer, and a 0.8 R tip polyacetal pen was used for 100,000 line writing passes at a load of 450 g (edge writing durability test). The linearity of the transparent touch panel was measured before and after the edge writing durability test. A change of 1.5% or more in linearity before and after the edge writing durability test was judged as NG.

<Writing durability test method>

At the center of the movable electrode base of the fabricated transparent touch panel, a 0.8 R tip polyacetal pen was used for 100,000 line writing passes at a load of 450 g in the diagonal direction (writing durability test), and the linearity of the transparent touch panel before and after the writing durability test was measured. A change of 1.5% or more in linearity of the transparent touch panel before and after the writing durability test was judged as NG.

Example 1

An ultraviolet curing polyfunctional acrylate resin paint was used to form a 4 $\mu$m-thick hard coat layer 1 on one side of a 188 $\mu$m-thick polyethylene terephthalate film (OFW, product of Teijin-DuPont Films, Young's modulus by indentation hardness test: 6.5 GPa (660 kgf/mm$^2$), plastic deformation hardness by indentation hardness tester: 539 MPa (55 kgf/mm$^2$), hardness by indentation hardness tester: 274 MPa (28 kgf/mm$^2$)).
Separately, 100 parts by weight of the urethane acrylate ARONIX M1200 (product of ToaGosei Co., Ltd.) and 3 parts by weight of IRGACURE 184 (product of Ciba Specialty Chemicals) were dissolved in methyl isobutyl ketone (MIBK) to prepare coating solution A. Coating solution A was coated onto the opposite side of the hard coat layer 1 by bar coating and cured by irradiation with ultraviolet rays to form cured resin layer-1(a) with a film thickness of 6.0 $\mu$m.

A sample for measureing the plastic deformation hardness of cured resin layer-1(a) (post-curing film thickness: 5 $\mu$m) was prepared by the same method, and the Young's modulus, plastic deformation hardness and hardness were measured. The measurement results are shown in Table 1.

Separately, 100 parts by weight of the tetrafunctional acrylate ARONIX M400 (product of ToaGosei Co., Ltd.) and 3 parts by weight of IRGACURE 184 (product of Ciba Specialty Chemicals) were dissolved in methyl isobutyl ketone (MIBK) to prepare coating solution B. Coating solution B was coated onto the cured resin layer-1(a) by bar coating and cured by irradiation with ultraviolet rays to form cured resin layer-2(a) with a film thickness of 4.0 $\mu$m. After lamination of the cured resin layer-1(a) and cured resin layer-2(a), the Young's modulus, plastic deformation hardness and hardness were measured. The measurement results are shown in Table 1.

A sample for measuring the Young's modulus, plastic deformation hardness and hardness of cured resin layer-2(a) (post-curing film thickness: 5 $\mu$m) was prepared by the same method, and measurement was conducted. The measurement results are shown in Table 1.

Next, $\gamma$-glycidoxypropyltrimethoxysilane (KBM403 by Shin-Etsu Chemical Co., Ltd.) and methyltrimethoxysilane (KBM13 by Shin-Etsu Chemical Co., Ltd.) were combined in a molar ratio of 1:1, and the alkoxysilanes were hydrolyzed by a publicly known method using aqueous acetic acid (pH=3.0). To the obtained alkoxysilane hydrolysate there was added N-$\beta$(aminoethyl)$\gamma$-aminopropylmethoxysilane (KBM603 by Shin-Etsu Chemical Co., Ltd.) in a solid weight proportion of 20:1, and the mixture was diluted with an isopropyl alcohol/n-butanol mixed solution to prepare alkoxysilane coating solution C.

The alkoxysilane coating solution C was coated onto the cured resin layer-2(a) by bar coating and baked at 130°C for 2 minutes, to prepare cured resin layer-3(a) with a film thickness of 65 nm. Also, an ITO layer was formed on the cured resin layer-3(a) by sputtering using an indium oxide-tin oxide target with an indium oxide:tin oxide weight ratio of 95:5 and a packing density of 98%, to fabricate a transparent conductive laminated body as a movable electrode base. The thickness of the formed ITO layer was approximately 20 nm, and the surface resistance value after formation was approximately 350 $\Omega$/$\square$ ($\Omega$/sq). The fabricated movable electrode base was subjected to heat treatment at 150°C, 90 min for crystallization of the ITO film. No change in haze was observed in the movable electrode base before and after heat treatment, and the surface resistance value after crystallization of the ITO was approximately 280 $\Omega$/$\square$ ($\Omega$/sq).

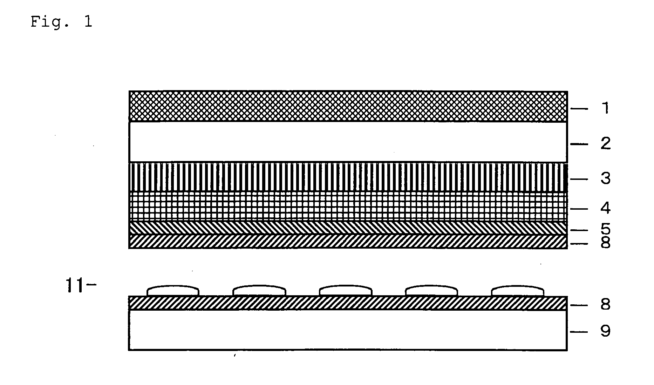

Separately, $SiO_2$ was dip coated onto both sides of a 1.1 mm-thick glass panel, and then an 18 nm-thick ITO film was formed in the same manner by sputtering. A dot spacer was then formed on the ITO film with a height of 7 $\mu$m, a diameter of 70 $\mu$m and a pitch of 1.5 mm, to fabricate a fixed electrode base. The fabricated fixed electrode base and movable electrode base were used to fabricate the transparent touch panel shown in Fig. 1.

The laminated construction was as follows, in order from the user side: hard coat layer (1 in Fig. 1)/polyethylene terephthalate film (2 in Fig. 1)/cured resin layer-1 (3 in Fig. 1)/cured resin layer-2 (4 in Fig. 1)/cured resin layer-3 (5 in Fig. 1)/transparent conductive layer (ITO layer) (8 in Fig. 1)/dot spacer (11 in Fig. 1)/transparent conductive layer (ITO layer) (8 in Fig. 1)/glass panel (9 in Fig. 1).

The fabricated transparent touch panel was subjected to a writing durability test and edge writing durability test. The linearity before and after testing is shown in Table 1.

Example 2

An ultraviolet curing polyfunctional acrylate resin paint was used to form a 4 $\mu$m-thick hard coat layer 1 on one side of a 188 $\mu$m-thick polyethylene terephthalate film (OFW, product of Teijin-DuPont Films, Young's modulus by indentation hardness test: 6.5 GPa (660 kgf/mm$^2$), plastic deformation hardness by indentation hardness tester: 539 MPa (55 kgf/mm$^2$), hardness by indentation hardness tester: 274 MPa (28 kgf/mm$^2$)).

The coating solution A of Example 1 was coated onto the opposite side of the hard coat layer 1 by bar coating and then cured by irradiation with ultraviolet rays to form cured resin layer-1(b) with a film thickness of 5.0 $\mu$m,.

Also, coating solution B of Example 1 was coated onto the cured resin layer-1(b) by bar coating and then cured by irradiation with ultraviolet rays to form cured resin layer-2(b) with a film thickness of 5.5 $\mu$m.

After lamination of the cured resin layer-1(b) and cured resin layer-2(b), the Young's modulus, plastic deformation hardness and hardness were measured. The measurement results are shown in Table 1.

Tetrabutoxytitanate (B-4 by Nippon Soda Co., Ltd.) was diluted with a mixed solvent of ligroin (special grade, Wako Pure Chemical Industries, Ltd.) and butanol (special grade, Wako Pure Chemical Industries, Ltd.) to prepare coating solution D.

With coating solution D there were mixed silica fine particles having a mean primary particle size of 0.5 $\mu$m at 0.3 parts by weight to 100 parts by weight of tetrabutoxytitanate, to prepare coating solution E.

The alkoxysilane coating solution C used in Example 1 was combined with coating solution E at a solid mixing ratio of 70:30 (E:C) to prepare coating solution F. With coating solution F there were mixed $TiO_2$ ultrafine particles having

a primary particle size of 20 nm at a weight ratio of 30:70 (TiO$_2$ ultrafine particles:metal alkoxide) to prepare coating solution G. After coating this coating solution G onto the cured resin layer-2(b) by bar coating, it was baked at 130°C for 2 minutes to form a high-refractive-index layer with a film thickness of 55 nm.

The alkoxysilane coating solution C was coated onto the high-refractive-index layer by bar coating and baked at 130°C for 2 minutes to form a low-refractive-index layer with a film thickness of 65 nm, to produce an optical interference layer comprising the high-refractive-index layer and low-refractive-index layer. On this optical interference layer there was formed an ITO layer by sputtering using an indium oxide-tin oxide target with an indium oxide:tin oxide weight ratio of 95:5 and a packing density of 98%, to fabricate a transparent conductive laminated body as a movable electrode base. The thickness of the formed ITO layer was approximately 20 nm, and the surface resistance value after formation was approximately 350 Ω/□ (Ω/sq). The fabricated movable electrode base was subjected to heat treatment at 150°C, 90 min for crystallization of the ITO film. No change in haze was observed in the movable electrode base before and after heat treatment, and the surface resistance value after crystallization of the ITO was approximately 280 Ω/□ (Ω/sq).

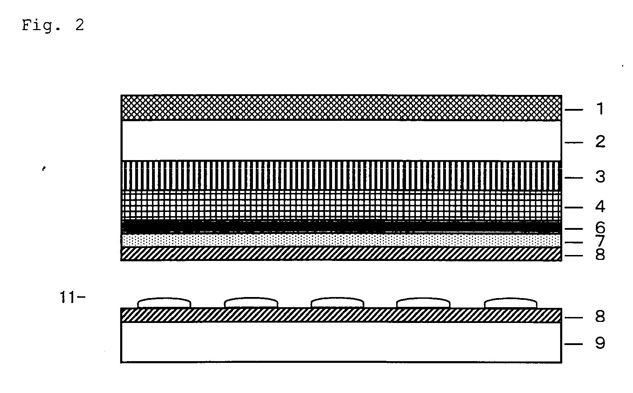

A fixed electrode base was fabricated in the same manner as Example 1. The fabricated fixed electrode base and movable electrode base were used to fabricate the transparent touch panel shown in Fig. 2.

Specifically, the laminated construction was as follows, in order from the user side: hard coat layer (1 in Fig. 2)/polyethylene terephthalate film (2 in Fig. 2)/cured resin layer-1 (3 in Fig. 2)/cured resin layer-2 (4 in Fig. 2)/high-refractive-index layer (6 in Fig. 2)/low-refractive-index layer (7 in Fig. 2)/transparent conductive layer (ITO layer) (8 in Fig. 2)/dot spacer (11 in Fig. 2)/transparent conductive layer (ITO layer) (8 in Fig. 2)/glass panel (9 in Fig. 2).

The fabricated transparent touch panel was subjected to a writing durability test and edge writing durability test. The linearity before and after testing is shown in Table 1.

Example 3

An ultraviolet curing polyfunctional acrylate resin paint was used to form a 4 μm-thick hard coat layer 1 on one side of a 188 μm-thick polyethylene terephthalate film (OFW, product of Teijin-DuPont Films, Young's modulus by indentation hardness test: 6.5 GPa (660 kgf/mm$^2$), plastic deformation hardness by indentation hardness tester: 539 MPa (55 kgf/mm$^2$), hardness by indentation hardness tester: 274 MPa (28 kgf/mm$^2$)).

Next, 75 parts by weight of the acrylonitrile-butadiene rubber NIPOL 1052J (product of Zeon Corp.), 25 parts by weight of the tetrafunctional acrylate ARONIX M400 (product of ToaGosei Co., Ltd.) and 3 parts by weight of IRGACURE 184 (product of Ciba Specialty Chemicals) were dissolved in a toluene:methyl isobutyl ketone (1:1) mixed solvent to prepare coating solution H. Coating solution H was coated onto the opposite side of the hard coat layer-1 by bar coating and then cured by irradiation with ultraviolet rays to form cured resin layer-1(c) with a film thickness of 5.5 μm.

A sample for measuring the Young's modulus, plastic deformation hardness and hardness of cured resin layer-1(c) (post-curing film thickness: 5 μm) was prepared by the same method, and measurement was conducted. The measurement results are shown in Table 1.

Also, coating solution B used in Example 1 was coated onto the cured resin layer-1(c) by bar coating, and then cured by irradiation with ultraviolet rays to form cured resin layer-2(c) with a film thickness of 4.5 μm. After lamination of the cured resin layer-1(c) and cured resin layer-2(c), the Young's modulus, plastic deformation hardness and hardness were measured. The measurement results are shown in Table 1.

The coating solution C used in Example 1 was coated onto the cured resin layer-2(c) by bar coating and baked at 130°C for 2 minutes to fabricate cured resin layer-3(c) with a film thickness of 65 nm. Also, an ITO layer was formed on the cured resin layer-3(c) by sputtering using an indium oxide-tin oxide target with an indium oxide:tin oxide weight ratio of 95:5 and a packing density of 98%, to prepare a transparent conductive laminated body as a movable electrode base. The thickness of the formed ITO layer was approximately 20 nm, and the surface resistance value after formation was approximately 350 Ω/□ (Ω/sq). The fabricated movable electrode base was subjected to heat treatment at 150°C, 90 min for crystallization of the ITO film. No change in haze was observed in the movable electrode base before and after heat treatment, and the surface resistance value after crystallization of the ITO was approximately 280 Ω/□ (Ω/sq).

A fixed electrode base was fabricated in the same manner as Example 1. The fabricated fixed electrode base and movable electrode base were used to fabricate the transparent touch panel shown in Fig. 1.

Specifically, the laminated construction was as follows, in order from the user side: hard coat layer (1 in Fig. 1)/polyethylene terephthalate film (2 in Fig. 1)/cured resin layer-1 (3 in Fig. 1)/cured resin layer-2 (4 in Fig. 1)/cured resin layer-3 (5 in Fig. 1)/transparent conductive layer (ITO layer) (8 in Fig. 1)/dot spacer (11 in Fig. 1)/transparent conductive layer (ITO layer) (8 in Fig. 1)/ glass panel (9 in Fig. 1).

The fabricated transparent touch panel was subjected to a writing durability test and edge writing durability test. The linearity before and after testing is shown in Table 1.

Example 4

An ultraviolet curing polyfunctional acrylate resin paint was used to form a 4 $\mu$m-thick hard coat layer 1 on one side of a 188 $\mu$m-thick polyethylene terephthalate film (OFW, product of Teijin-DuPont Films, Young's modulus by indentation hardness test: 6.5 GPa (660 kgf/mm$^2$) plastic deformation hardness by indentation hardness tester: 539 MPa (55 kgf/mm$^2$), hardness by indentation hardness tester: 274 MPa (28 kgf/mm$^2$)).

The synthetic latex NIPOL LX857X2 (product of Zeon Corp.) was coated onto the opposite side of the hard coat layer 1 and dried at 100°C for 2 minutes to form a cured resin layer-1(d) with a film thickness of 6.0 $\mu$m. A sample for measurement of the hardness of the cured resin layer-1(d) (post-drying thickness: 5 $\mu$m) was fabricated in the same manner and the Young's modulus, plastic deformation hardness and hardness were measured. The measurement results are shown in Table 1.

Also, coating solution B used in Example 1 was coated onto the cured resin layer-1(d) by bar coating, and then cured by irradiation with ultraviolet rays to form cured resin layer-2(d) with a film thickness of 4.5 $\mu$m. After laminating the cured resin layer-1(d) and cured resin layer-2(d), the Young's modulus, plastic deformation hardness and hardness were measured. The measurement results are shown in Table 1.

After forming an optical interference layer in the same manner as Example 2, an SiOx layer was formed on the low-refractive-index layer of the optical interference layer by sputtering using an Si target. The thickness of the formed SiOx layer was approximately 2.0 nm. On this SiOx layer there was formed an ITO layer by sputtering using an indium oxide-tin oxide target with an indium oxide:tin oxide weight ratio of 97:3 and a packing density of 98%, to fabricate a transparent conductive laminated body as a movable electrode base. The thickness of the formed ITO layer was approximately 20 nm, and the surface resistance value after formation was approximately 550 $\Omega/\square$ ($\Omega$/sq). The fabricated movable electrode base was subjected to heat treatment at 150°C, 60 min for crystallization of the ITO film. No change in haze was observed in the movable electrode base before and after heat treatment, and the surface resistance value after crystallization of the ITO was approximately 450 $\Omega/\square$ ($\Omega$/sq).

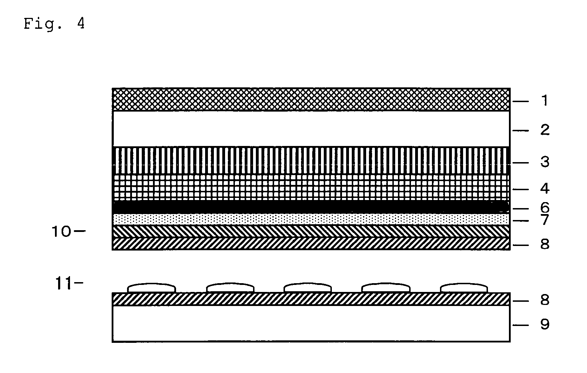

A fixed electrode base was fabricated in the same manner as Example 1. The fabricated fixed electrode base and movable electrode base were used to fabricate the transparent touch panel shown in Fig. 4.

Specifically, the laminated construction was as follows, in order from the user side: hard coat layer (1 in Fig. 4)/polyethylene terephthalate film (2 in Fig. 4)/cured resin layer-1 (3 in Fig. 4)/cured resin layer-2 (4 in Fig. 4)/high-refractive-index layer (6 in Fig. 4)/low-refractive-index layer (7 in Fig. 4)/metal compound layer (SiOx layer) (1 in Fig. 40)/transparent conductive layer (ITO layer) (8 in Fig. 4)/dot spacer (11 in Fig. 4)/transparent conductive layer (ITO layer) (8 in Fig. 4)/glass panel (9 in Fig. 4).

The fabricated transparent touch panel was subjected to a writing durability test and edge writing durability test. The linearity before and after testing is shown in Table 1.

Comparative Example 1

An ultraviolet curing polyfunctional acrylate resin paint was used to form a 4 $\mu$m-thick hard coat layer 1 on one side of a 188 $\mu$m-thick polyethylene terephthalate film (OFW, product of Teijin-DuPont Films, Young's modulus by indentation hardness test: 6.5 GPa (660 kgf/mm$^2$), plastic deformation hardness by indentation hardness tester: 539 MPa (55 kgf/mm$^2$), hardness by indentation hardness tester: 274 MPa (28 kgf/mm$^2$)).

Coating solution A fabricated in Example 1 was coated onto the opposite side of the hard coat layer 1 by bar coating, and then cured by irradiation with ultraviolet rays to form cured resin layer-1(e) with a film thickness of 5.0 $\mu$m.

Coating solution C prepared in Example 1 was coated onto the cured resin layer-1(e) by bar coating and baked at 130°C for 2 minutes to fabricate cured resin layer-3(e) with a film thickness of 65 nm. Also, an ITO layer was formed on the cured resin layer-3(e) by sputtering using an indium oxide-tin oxide target with an indium oxide:tin oxide weight ratio of 95:5 and a packing density of 98%, to prepare a transparent conductive laminated body as a movable electrode base. The thickness of the formed ITO layer was approximately 20 nm, and the surface resistance value after formation was approximately 350 $\Omega/\square$ ($\Omega$/sq). The fabricated movable electrode base was subjected to heat treatment at 150°C, 90 min, but fine creases formed in the ITO layer and haze increase (whitening) occurred in the movable electrode base.

Comparative Example 2

An ultraviolet curing polyfunctional acrylate resin paint was used to form a 4 $\mu$m-thick hard coat layer 1 on one side of a 188 $\mu$m-thick polyethylene terephthalate film (OFW, product of Teijin-DuPont Films, Young's modulus by indentation hardness test: 6.5 GPa (660 kgf/mm$^2$), plastic deformation hardness by indentation hardness tester: 539 MPa (55 kgf/mm$^2$), hardness by indentation hardness tester: 274 MPa (28 kgf/mm$^2$)).

Coating solution B fabricated in Example 1 was coated onto the opposite side of the hard coat layer 1 by bar coating, and then cured by irradiation with ultraviolet rays to form cured resin layer-2(f) with a film thickness of 5.0 $\mu$m.

Coating solution C prepared in Example 1 was coated onto the cured resin layer-2(f) by bar coating and baked at 130°C for 2 minutes to fabricate cured resin layer-3(f) with film thickness of 65 nm. Also, an ITO layer was formed on the cured resin layer-3(f) by sputtering using an indium oxide-tin oxide target with an indium oxide:tin oxide weight ratio of 95:5 and a packing density of 98%, to prepare a transparent conductive laminated body as a movable electrode base. The thickness of the formed ITO layer was approximately 20 nm, and the surface resistance value after formation was approximately 350 $\Omega/\square$ ($\Omega$/sq). The fabricated movable electrode base was subjected to heat treatment at 150°C, 90 min for crystallization of the ITO film. No change in haze was observed in the movable electrode base before and after heat treatment, and the surface resistance value after crystallization of the ITO was approximately 280 $\Omega/\square$ ($\Omega$/sq).

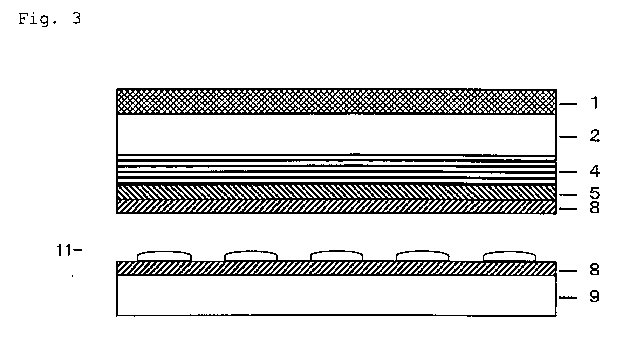

A fixed electrode base was fabricated in the same manner as Example 1. The fabricated fixed electrode base and movable electrode base were used to fabricate the transparent touch panel shown in Fig. 3.

Specifically, the laminated construction was as follows, in order from the user side: hard coat layer (1 in Fig. 3)/polyethylene terephthalate film (2 in Fig. 3)/cured resin layer-2 (4 in Fig. 3)/cured resin layer-3 (5 in Fig. 3)/transparent conductive layer (ITO layer) (8 in Fig. 3)/dot spacer (11 in Fig. 3)/transparent conductive layer (ITO layer) (8 in Fig. 3)/ glass panel (9 in Fig. 3).

The fabricated transparent touch panel was subjected to a writing durability test and edge writing durability test. The linearity before and after testing is shown in Table 1.

Comparative Example 3

An ultraviolet curing polyfunctional acrylate resin paint was used to form a 4 $\mu$m-thick hard coat layer 1 on one side of a 188 $\mu$m-thick polyethylene terephthalate film (OFW, product of Teijin-DuPont Films, Young's modulus by indentation hardness test: 6.5 GPa (660 kgf/mm$^2$), plastic deformation hardness by indentation hardness tester: 539 MPa (55 kgf/mm$^2$), hardness by indentation hardness tester: 274 MPa (28 kgf/mm$^2$)).

Separately, 100 parts by weight of the polyfunctional acrylate NK OLIGO U15HA (product of Shin-Nakamura Chemical Co., Ltd.), 100 parts by weight of the monofunctional acrylate ARONIX TO-1429 (product of ToaGosei Co., Ltd.) and 10 parts by weight of IRGACURE 184 (product of Ciba Specialty Chemicals) were dissolved in methyl isobutyl ketone (MIBK) to prepare coating solution I. Coating solution I was coated onto the opposite side of the hard coat layer 1 by bar coating, and then cured by irradiation with ultraviolet rays to form cured resin layer-2(g) with a film thickness of 4.0 $\mu$m. The results of measuring the Young's modulus, plastic deformation hardness and hardness of the fabricated cured resin layer-2(g) are shown in Table 1.

Coating solution C prepared in Example 1 was coated onto the cured resin layer-2(g) by bar coating and baked at 130°C for 2 minutes to fabricate cured resin layer-3(g) with a film thickness of 65 nm. Also, an ITO layer was formed on the cured resin layer-3(g) by sputtering using an indium oxide-tin oxide target with an indium oxide:tin oxide weight ratio of 95:5 and a packing density of 98%, to prepare a transparent conductive laminated body as a movable electrode base. The thickness of the formed ITO layer was approximately 20 nm, and the surface resistance value after formation was approximately 350 $\Omega/\square$ ($\Omega$/sq). The fabricated movable electrode base was heat treated at 150°C, 90 min for crystallization of the ITO film. No change in haze was observed in the movable electrode base before and after heat treatment, and the surface resistance value after crystallization of the ITO was approximately 280 $\Omega/\square$ ($\Omega$/sq).

A fixed electrode base was fabricated in the same manner as Example 1. The fabricated fixed electrode base and movable electrode base were used to fabricate the transparent touch panel shown in Fig. 3.

Specifically, the laminated construction was as follows, in order from the user side: hard coat layer (1 in Fig. 3)/polyethylene terephthalate film (2 in Fig. 3)/cured resin layer-2 (4 in Fig. 3)/cured resin layer-3 (5 in Fig. 3)/transparent conductive layer (ITO layer) (8 in Fig. 3)/dot spacer (11 in Fig. 3)/transparent conductive layer (ITO layer) (8 in Fig. 3)/ glass panel (9 in Fig. 3).

The fabricated transparent touch panel was subjected to a writing durability test and edge writing durability test. The linearity before and after testing is shown in Table 1.

Comparative Example 4

An ultraviolet curing polyfunctional acrylate resin paint was used to form a 4 $\mu$m-thick hard coat layer 1 on one side of a 188 $\mu$m-thick polyethylene terephthalate film (OFW, product of Teijin-DuPont Films, Young's modulus by indentation hardness test: 6.5 GPa (660 kgf/mm$^2$), plastic deformation hardness by indentation hardness tester: 539 MPa (55 kgf/mm$^2$), hardness by indentation hardness tester: 274 MPa (28 kgf/mm$^2$)).

Coating solution A of Example 1 was coated onto the opposite side of the hard coat layer 1 by bar coating, and then cured by irradiation with ultraviolet rays to form cured resin layer-1(h) with a film thickness of 8.0 $\mu$m.

Also, coating solution B of Example 1 was coated onto the cured resin layer-1(h) by bar coating, and then cured by irradiation with ultraviolet rays to form cured resin layer-2(h) with a film thickness of 0.75 $\mu$m. After lamination of the cured resin layer-1(h) and cured resin layer-2(h), the Young's modulus, plastic deformation hardness and hardness were measured. The measurement results are shown in Table 1.

Coating solution C prepared in Example 1 was coated onto the cured resin layer-1(h) by bar coating and baked at 130°C for 2 minutes to fabricate cured resin layer-3(h) with a film thickness of 65 nm. Also, an ITO layer was formed on the cured resin layer-3(h) by sputtering using an indium oxide-tin oxide target with an indium oxide:tin oxide weight ratio of 95:5 and a packing density of 98%, to prepare a transparent conductive laminated body as a movable electrode base. The thickness of the formed ITO layer was approximately 20 nm, and the surface resistance value after formation was approximately 350 Ω/□ (Ω/sq). The fabricated movable electrode base was subjected to heat treatment at 150°C, 90 min, but fine creases formed in the ITO layer and haze increase (whitening) occurred in the movable electrode base.

Comparative Example 5

An ultraviolet curing polyfunctional acrylate resin paint was used to form a 4 μm-thick hard coat layer 1 on one side of a 188 μm-thick polyethylene terephthalate film (OFW, product of Teijin-DuPont Films, Young's modulus by indentation hardness test: 6.5 GPa (660 kgf/mm$^2$), plastic deformation hardness by indentation hardness tester: 539 MPa (55 kgf/mm$^2$), hardness by indentation hardness tester: 274 MPa (28 kgf/mm$^2$)).

Coating solution A of Example 1 was coated onto the opposite side of the hard coat layer 1 by bar coating, and then cured by irradiation with ultraviolet rays to form cured resin layer-1(i) with a film thickness of 1.5 μm.

Also, coating solution B of Example 1 was coated onto the cured resin layer-1(i) to a cured film thickness of 6.0 μm by bar coating, and then cured by irradiation with ultraviolet rays to form cured resin layer-2(i). After lamination of the cured resin layer-1(i) and cured resin layer-2(i), the Young's modulus, plastic deformation hardness and hardness were measured. The measurement results are shown in Table 1.

Coating solution C prepared in Example 1 was coated onto the cured resin layer-2(i) by bar coating and baked at 130°C for 2 minutes to fabricate cured resin layer-3(i) with a film thickness of 65 nm. Also, an ITO layer was formed on the cured resin layer-3(i) by sputtering using an indium oxide-tin oxide target with an indium oxide:tin oxide weight ratio of 95:5 and a packing density of 98%, to prepare a transparent conductive laminated body as a movable electrode base. The thickness of the formed ITO layer was approximately 20 nm, and the surface resistance value after formation was approximately 350 Ω/□ (Ω/sq). The fabricated movable electrode base was subjected to heat treatment at 150°C, 90 min for crystallization of the ITO film. No change in haze was observed in the movable electrode base before and after heat treatment, and the surface resistance value after crystallization of the ITO was approximately 280 Ω/□ (Ω/sq).

A fixed electrode base was fabricated in the same manner as Example 1. The fabricated fixed electrode base and movable electrode base were used to fabricate the transparent touch panel shown in Fig. 1.

Specifically, the laminated construction was as follows, in order from the user side: hard coat layer (1 in Fig. 1)/polyethylene terephthalate film (2 in Fig. 1)/cured resin layer-1 (3 in Fig. 1)/cured resin layer-2 (4 in Fig. 1)/cured resin layer-3 (5 in Fig. 1)/transparent conductive layer (ITO layer) (8 in Fig. 1)/dot spacer (11 in Fig. 1)/transparent conductive layer (ITO layer) (8 in Fig. 1)/ glass panel (9 in Fig. 1).

The fabricated transparent touch panel was subjected to a writing durability test and edge writing durability test. The linearity before and after testing is shown in Table 1.

Table 1

| | | W GPa (kgf/mm²) Top rox: $W_1$ Middle row: $W_2$ Bottom row: $W_3$ | HV MPa (kgf/mm²) Top row: $HV_1$ Middle row: $HV_2$ Bottom row: $HV_3$ | DH MPa (kgf/mm²)Top row: $DH_1$ Middle row: $DH_2$ Bottom row: $DH_3$ | $d_2/d_1$ | Writing durability (linearity %) | | | Edge writing durability (linearity %) | | |
|---|---|---|---|---|---|---|---|---|---|---|---|
| | | | | | | Initial | After test | Change | Initial | After test | Change |
| E X A M P L E S | 1 | 3.1(310) | 107.9(11) | 88.3(9) | 0.66 | 0.84 | 0.96 | +0.12 | 0.78 | 0.79 | +0.01 |
| | | 9.4(950) | 961.1(98) | 431.5(44) | | | | | | | |
| | | 6.4(650) | 539.4(55) | 274.6(28) | | | | | | | |
| | 2 | 3.1(310) | 107.9(11) | 88.3(9) | 1.10 | 0.66 | 0.72 | +0.06 | 0.54 | 0.69 | +0.15 |
| | | 9.4(950) | 961.1(98) | 431.5(44) | | | | | | | |
| | | 7.7(780) | 637.4(65) | 304.0(31) | | | | | | | |
| | 3 | 2.6(260) | 68.6(7) | 68.6(7) | 0.81 | 0.78 | 0.86 | +0.08 | 0.93 | 0.69 | +0.03 |
| | | 9.4(950) | 961.1(98) | 431.5(44) | | | | | | | |
| | | 6.0(610) | 480.5(49) | 264.8(27) | | | | | | | |
| | 4 | 0.4(42) | 109.8(11) | 20.6(2) | 0.75 | 0.54 | 0.56 | +0.02 | 0.66 | 0.69 | +0.03 |
| | | 9.45(950) | 961.1(98) | 431.5(44) | | | | | | | |
| | | 5.9(600) | 264.0(27) | 178.5(18) | | | | | | | |

(continued)

| | | | W GPa (kgf/mm²) Top rox: W₁ Middle row: W₂ Bottom row: W₃ | HV MPa (kgf/mm²) Top row: HV₁ Middle row: HV₂ Bottom row: HV₃ | DH MPa (kgf/mm²)Top row: DH₁ Middle row: DH₂ Bottom row: DH₃ | d₂/d₁ | Writing durability (linearity %) | | | Edge writing durability (linearity %) | | |
|---|---|---|---|---|---|---|---|---|---|---|---|---|
| | | | | | | | Initial | After test | Change | Initial | After test | Change |
| C O M P A R A T I V E  E X A M P L E S | 1 | | 3.1(310) | 107.9(11) | 88.3(9) | - | - | - | - | - | - | - |
| | | | - | - | - | | | | | | | |
| | | | - | - | - | | | | | | | |
| | 2 | | - | - | - | - | 0.59 | 0.60 | +0.01 | 0.90 | 23.0 | +21.1 |
| | | | 9.4(950) | 961.1(98) | 431.5(44) | | | | | | | |
| | | | - | - | - | | | | | | | |
| | 3 | | - | - | - | - | 0.65 | 0.71 | +0.06 | 0.54 | 7.91 | +7.37 |
| | | | 7.6(772 | 507(6552) | 293.7(30) | | | | | | | |
| | | | - | - | - | | | | | | | |
| | 4 | | 3.1(310) | 107.9(11) | 88.3(9) | 0.09 | - | - | - | - | - | - |
| | | | 9.4(950) | 961.1(98) | 431.5(44) | | | | | | | |
| | | | 4.3(440) | 198.1(20) | 98.1(10) | | | | | | | |
| | 5 | | 3.1(310) | 107.9(11) | 88.3(9) | 4.0 | 0.98 | 1.16 | +0.18 | 0.72 | 33.4 | +32.7 |
| | | | 9.4(950) | 961.1(98) | 431.5(44) | | | | | | | |
| | | | 9.1(920) | 921.7(93) | 421.7(43) | | | | | | | |

Since fine creases and haze increase (whitening) occurred in the ITO surface after heat treatment of the movable electrode base in Comparative Examples 1 and 4, they were not subjected to a writing durability or edge writing durability test. The abbreviations in the table are as follows.

$W_1$: Young's modulus by indentation test with cured resin layer-1 alone.

$W_2$: Young's modulus by indentation test with cured resin layer-2 alone.

$W_3$: Young's modulus by indentation test after lamination of cured resin layer-1 and cured resin layer-2.

$HV_1$: Plastic deformation hardness by indentation test with cured resin layer-1 alone.

$HV_2$: Plastic deformation hardness by indentation test with cured resin layer-2 alone.

$HV_3$: Plastic deformation hardness by indentation test after lamination of cured resin layer-1 and cured resin layer-2.

$DH_1$: Hardness by indentation test with cured resin layer-1 alone.

$DH_2$: Hardness by indentation test with cured resin layer-2 alone.

$DH_3$: Hardness by indentation test after lamination of cured resin layer- 1 and cured resin layer-2.

$d_1$: Film thickness of cured resin layer-1.

$d_2$: Film thickness of cured resin layer-2.

## Claims

1. A transparent conductive laminated body having a cured resin layer-1 and cured resin layer-2 laminated in that order on at least one side of a transparent organic polymer base, and a transparent conductive layer laminated on the cured resin layer-2, the transparent conductive laminated body being **characterized in that** the relationship between the film thickness $d_1$ of the cured resin layer-1 and the film thickness $d_2$ of the cured resin layer-2 is $0.1 \leq d_2/d_1 \leq 3.0$, the thickness of each is $0.5\ \mu m \leq d_1 \leq 10\ \mu m$, $0.5\ \mu m \leq d_2 \leq 10\ \mu m$, and at least one of the following conditions (A) to (C) are satisfied.

   Condition (A): The Young's moduli of the cured resin layer-1 and the cured resin layer-2 are different and satisfy the relationships $W_2 > W_0 > W_1$ and $W_2 > W_3 > W_1$ as measured by an indentation hardness test (indentation tester/set indentation depth: $0.5\ \mu m$), and the Young's modulus $W_3$ is in the range of $1.9\ GPa \leq W_3 \leq 8.8\ GPa$ ($200\ kgf/mm^2 \leq W_3 \leq 900\ kgf/mm^2$). (Wherein the Young's modulus of the transparent organic polymer base is represented as $W_0$, the Young's modulus measured upon forming the cured resin layer-1 on the transparent organic polymer base is represented as $W_1$, the Young's modulus upon forming the cured resin layer-2 on the transparent organic polymer base is represented as $W_2$, and the Young's modulus upon laminating the cured resin layer-1 and cured resin layer-2 **in that** order on the transparent organic polymer base is represented as $W_3$.)
   Condition (B): The plastic deformation hardness differs for the cured resin layer-1 and cured resin layer-2, and are in the relationships $HV_2 > HV_0 > HV_1$ and $HV_2 > HV_3 > HV_1$. (Wherein the plastic deformation hardness of the transparent organic polymer base is represented by $HV_0$, the plastic deformation hardness measured when the cured resin layer-1 is formed on the transparent organic polymer base is represented as $HV_1$, the plastic deformation hardness measured when the cured resin layer-2 is formed on the transparent organic polymer base is represented as $HV_2$, and the plastic deformation hardness when the cured resin layer-1 and cured resin layer-2 are laminated **in that** order on the transparent organic polymer base is represented as $HV_3$.)
   Condition (C): The hardnesses of the cured resin layer-1 and cured resin layer-2 differ, the relationships $DH_2 > DH_0 > DH_1$ and $DH_2 > DH_3 > DH_1$ are satisfied as measured with an indentation hardness tester (nanoindentation tester/set indentation depth: $0.5\ \mu m$), and the hardness $DH_3$ is in the range of $98\ MPa \leq DH_3 \leq 392\ MPa$ ($10\ kgf/mm^2 \leq DH_3 \leq 40\ kgf/mm^2$). (Wherein the hardness of the transparent organic polymer base is represented as $DH_0$, the hardness measured upon forming the cured resin layer-1 on the transparent organic polymer base is represented as $DH_1$, the hardness measured upon forming the cured resin layer-2 on the transparent organic polymer base is represented as $DH_2$ and the hardness upon laminating the cured resin layer-1 and cured resin layer-2 **in that** order on the transparent organic polymer base is represented as $DH_3$.)

2. A transparent conductive laminated body according to claim 1, wherein the film thickness $d_1$ of the cured resin layer-1 and the film thickness $d_2$ of the cured resin layer-2 are in the relationship $0.15 \leq d_2/d_1 \leq 2.5$, and the layer thicknesses are $1\ \mu m \leq d_1 \leq 10\ \mu m$, $1\ \mu m \leq d_2 \leq 10\ \mu m$.

3. A transparent conductive laminated body according to claim 1, wherein condition (A') below is also satisfied.

   Condition (A'): The Young's modulus $W_3$ is in the range of $3.9\ GPa \leq W_3 \leq 8.8\ GPa$ ($400\ kgf/mm^2 \leq W_3 \leq 900\ kgf/mm^2$).

4. A transparent conductive laminated body according to claim 1, wherein at least one of the following conditions (D) to (F) is also satisfied.

Condition (D): The Young's modulus $W_1$ is 0.3 GPa $\leq W_1 \leq$ 4.9 GPa (30 kgf/mm$^2$ $\leq W_1 \leq$ 500 kgf/mm$^2$), and the Young's modulus $W_2$ is 6.9 GPa $\leq W_2 \leq$ 9.8 GPa (700 kgf/mm$^2$ $\leq W_2 \leq$ 1000 kgf/mm$^2$) .
Condition (E): The plastic deformation hardness $HV_1$ is 9.8 MPa $\leq HV_1 \leq$ 196 MPa (1 kgf/mm$^2$ $\leq HV_1 \leq$ 20 kgf/mm$^2$), and the plastic deformation hardness $HV_2$ is 588 MPa $\leq HV_2 \leq$ 1078 MPa (60 kgf/mm$^2$ $\leq HV_2 \leq$ 110 kgf/mm$^2$) .
Condition (F): The hardness $DH_1$ is 9.8 MPa $\leq DH_1 \leq$ 147 MPa (1 kgf/mm$^2$ $\leq DH_1 \leq$ 15 kgf/mm$^2$), and $DH_2$ is 245 MPa $\leq DH_2 \leq$ 490 MPa (25 kgf/mm$^2$ $\leq DH_2 \leq$ 50 kgf/mm$^2$) .

5. A transparent conductive laminated body according to claim 4, wherein condition (D') below is also satisfied.

Condition (D'): The Young's modulus $W_1$ is 0.5 GPa $\leq W_1 \leq$ 4.9 GPa (50 kgf/mm$^2$ $\leq W_1 \leq$ 500 kgf/mm$^2$), and the Young's modulus $W_2$ is 6.9 GPa $\leq W_2 \leq$ 9.8 GPa (700 kgf/mm$^2$ $\leq W_2 \leq$ 1000 kgf/mm$^2$) .

6. A transparent conductive laminated body according to claim 4, wherein condition (G) below is also satisfied.

Condition (G): The plastic deformation hardness $HV_3$ is in the range of 98 MPa $\leq HV_3 \leq$ 833 MPa (10 kgf/mm$^2$ $\leq HV_3 \leq$ 85 kgf/mm$^2$).

7. A transparent conductive laminated body according to claim 6, wherein condition (G') below is also satisfied.

Condition (G'): The plastic deformation hardness $HV_3$ is in the range of 196 MPa $\leq HV_3 \leq$ 833 MPa (20 kgf/mm$^2$ $\leq HV_3 \leq$ 85 kgf /mm$^2$).

8. A transparent conductive laminated body according to claim 1, which further comprises a metal compound layer situated between the cured resin layer-2 and the transparent conductive layer and in contact with the transparent conductive layer, having a thickness which is smaller than that of the transparent conductive layer and in a range of 0.5 nm to 10.0 nm.

9. A transparent conductive laminated body according to claim 1, wherein the cured resin layer-1 contains at least one component selected from the group consisting of (a) cured resins of urethane acrylate monomer and (b) synthetic rubber materials at 10 wt% or greater.

10. A transparent conductive laminated body according to claim 8, wherein the cured resin layer-1 contains at least one component selected from the group consisting of (a) cured resins of urethane acrylate monomer and (b) synthetic rubber materials at 10 wt% or greater.

11. A transparent conductive laminated body according to claim 1, which comprises a cured resin layer-3 having a refractive index of 1.20-1.55 and a thickness of 0.05-0.5 $\mu$m between the cured resin layer-2 and the transparent conductive layer.

12. A transparent conductive laminated body according to claim 11, wherein the cured resin layer-3 contains fine particles B having a mean primary particle size of at least 1.1 times the thickness of the cured resin layer-3 and a mean primary particle size of no greater than 1.2 $\mu$m.

13. A transparent conductive laminated body according to claim 12, wherein the content of the fine particles B in the cured resin layer-3 is no greater than 0.5 wt% based on the cured resin component forming the cured resin layer-3.

14. A transparent conductive laminated body according to claim 8, which comprises a cured resin layer-3 having a refractive index of 1.20-1.55 and a thickness of 0.05-0.5 $\mu$m between the cured resin layer-2 and the metal compound layer.

15. A transparent conductive laminated body according to claim 14, wherein the cured resin layer-3 contains fine particles B having a mean primary particle size of at least 1.1 times the thickness of the cured resin layer-3 and a mean primary particle size of no greater than 1.2 $\mu$m.

**16.** A transparent conductive laminated body according to claim 15, wherein the content of the fine particles B in the cured resin layer-3 is no greater than 0.5 wt% based on the cured resin component forming the cured resin layer-3.

**17.** A transparent conductive laminated body according to claim 1, which comprises an optical interference layer composed of at least one low-refractive-index layer and at least one high-refractive-index layer between the cured resin layer-2 and the transparent conductive layer, with the low-refractive-index layer in contact with the transparent conductive layer.

**18.** A transparent conductive laminated body according to claim 17, wherein either or both the high-refractive-index layer and low-refractive-index layer contain fine particles B having a mean primary particle size of at least 1.1 times the thickness of the optical interference layer and a mean primary particle size of no greater than 1.2 $\mu$m.

**19.** A transparent conductive laminated body according to claim 18, wherein the content of the fine particles B in the optical interference layer is no greater than 0.5 wt% based on the cured resin component forming the high-refractive-index layer and/or low-refractive-index layer.

**20.** A transparent conductive laminated body according to claim 8, which comprises an optical interference layer composed of at least one low-refractive-index layer and at least one high-refractive-index layer between the cured resin layer-2 and the metal compound layer, with the low-refractive-index layer in contact with the metal compound layer.

**21.** A transparent conductive laminated body according to claim 20, wherein either or both the high-refractive-index layer and low-refractive-index layer contain fine particles B having a mean primary particle size of at least 1.1 times the thickness of the optical interference layer and a mean primary particle size of no greater than 1.2 $\mu$m.

**22.** A transparent conductive laminated body according to claim 21, wherein the content of the fine particles B in the optical interference layer is no greater than 0.5 wt% based on the cured resin component forming the high-refractive-index layer and/or low-refractive-index layer.

**23.** A transparent conductive laminated body according to claim 1, wherein the transparent conductive layer is a crystalline film composed mainly of indium oxide, and the thickness of the transparent conductive layer is 5-50 nm.

**24.** A transparent conductive laminated body according to claim 8, wherein the transparent conductive layer is a crystalline film composed mainly of indium oxide, and the thickness of the transparent conductive layer is 5-50 nm.

**25.** A transparent touch panel composed of two transparent electrode bases having transparent conductive layers formed on at least one side thereof, situated with the transparent conductive layers facing each other, the transparent touch panel being **characterized in that** a transparent conductive laminated body according to claim 1 is used as at least one of the transparent electrode bases.

**26.** A transparent touch panel composed of two transparent electrode bases having transparent conductive layers formed on at least one side thereof, situated with the transparent conductive layers facing each other, the transparent touch panel being **characterized in that** a transparent conductive laminated body according to claim 8 is used as at least one of the transparent electrode bases.

Fig. 1

11—

Fig. 2

Fig. 3

Fig. 4

10—

11—

**INTERNATIONAL SEARCH REPORT**

| International application No. |
| --- |
| PCT/JP2004/019807 |

**A. CLASSIFICATION OF SUBJECT MATTER**
    Int.Cl⁷ B32B7/02, H01B5/14

According to International Patent Classification (IPC) or to both national classification and IPC

**B. FIELDS SEARCHED**

Minimum documentation searched (classification system followed by classification symbols)
    Int.Cl⁷ B32B1/00-35/00, H01B5/14

Documentation searched other than minimum documentation to the extent that such documents are included in the fields searched

| Jitsuyo Shinan Koho | 1926-1996 | Toroku Jitsuyo Shinan Koho | 1994-2005 |
| Kokai Jitsuyo Shinan Koho | 1971-2005 | Jitsuyo Shinan Toroku Koho | 1996-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2002-36436 A (Fuji Photo Film Co., Ltd.), 25 February, 2002 (25.02.02), All references (Family: none) | 1-26 |
| A | JP 2000-52472 A (Toppan Printing Co., Ltd.), 22 February, 2000 (22.02.00), All references (Family: none) | 1-26 |
| A | JP 11-38201 A (Fuji Photo Film Co., Ltd.), 12 February, 1999 (12.02.99), All references (Family: none) | 1-26 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 31 March, 2005 (31.03.05) | 26 April, 2005 (26.04.05) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

| INTERNATIONAL SEARCH REPORT | International application No. |
|---|---|
| | PCT/JP2004/019807 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 10-177101 A (Sekisui Chemical Co., Ltd.),<br>30 June, 1998 (30.06.98),<br>All references<br>(Family: none) | 1-26 |

Form PCT/ISA/210 (continuation of second sheet) (January 2004)

## REFERENCES CITED IN THE DESCRIPTION

**Patent documents cited in the description**

- JP 2066809 A
- JP 2129808 A
- JP 8192492 A
- JP 11034206 A
- JP 2002163932 A
- JP 2004158253 A
- JP 11286067 A